# EUROPEAN PATENT SPECIFICATION

(11) **EP 1 767 576 B1**
(45) Date of publication and mention of the grant of the patent: **02.12.2009**
(21) Application number: 05765300.8
(22) Date of filing: 01.07.2005
(51) Int. Cl.: C08L 45/00, C08K 5/3435, G02B 1/04, G11B 7/135

(54) **RESIN COMPOSITION AND USE THEREOF**
HARZZUSAMMENSETZUNG UND VERWENDUNG DAVON
COMPOSITION DE RÉSINE ET SON UTILISATION

(30) Priority: 09.07.2004 JP 2004203332
(43) Date of publication of application: 28.03.2007
(73) Proprietor: Mitsui Chemicals, Inc., Tokyo 105-7117 (JP)
(72) Inventor: SHIBUYA, Atsushi; c/o Mitsui Chemicals, Inc.,, 2990265 (JP); HIROSE, Toshiyuki; c/o Mitsui Chemicals, Inc.,, 2990265 (JP)
(74) Representative: Cresswell, Thomas Anthony
(86) International application number: PCT/JP2005/012240
(87) International publication number: WO 2006/006431

(56) References cited:
- WO-A-01/92392
- GB-A- 2 386 901
- JP-A- 7 216 152
- JP-A- 2000 119 474
- JP-A- 2001 074 915
- JP-A- 2003 321 518

## Description

### TECHNICAL FIELD

The present invention relates to a cyclic olefin-based resin composition, an optical element useful for an optical pickup device, and to an optical pickup device, and particularly relates to a most appropriate resin composition used for an optical element which is useful for an optical pickup device employing a light source of around 405 nm for blue-violet laser, an optical element containing the resin composition, and an optical pickup device.

### BACKGROUND ART

From the past to the present, an optical pickup device (also known as an optical head, optical head device) for playing back/recording information on an optical information recording medium (also called as an optical disc, or media) such as CD (compact disc), DVD (digital video disc, or digital versatile disc) or the like, is developed and manufactured, and is widely popularized.

Recently, research and development on the standard of an optical information recording medium which is capable of recording higher density of information is carried out.
Such optical pickup device forms a spot by collecting beam of light emitted from mainly a laser diode as a light source through an optical system including an optical element such as a beam shaping prism, a collimator, a beam splitter, an objective optical element, or the like, onto the information recording face of an optical disc, next collects reflection from an information recording hole (also called as a pit) on the recording face through a same optical system onto a sensor at this time, and then converts into an electrical signal, to playback the information. During this time, '0' and '1' information are discriminated based on the phenomenon that the light beam of reflectance varies according to the shape of the information recording hole. On the information recording face of an optical disc, a protective layer made of plastic, which is also called as a cover glass, is provided as a protective substrate.

When recording information on recording type media such as CD-R, CD-RW, and the like, a spot resulted from the laser beam is formed on a recording surface and a thermochemical change is generated in a recording material on the recording face. Accordingly, for example in the case of CD-R, the thermal diffusivity pigment is irreversibly changed and a shape same to the information recording hole is formed. In the case of CD-RW, since a phase change-type material is used, a reversible change between a crystalline state and non-crystalline state by the thermochemical change is generated, and thus the rewriting of the information is possible.
For the optical pickup device for playing back the information from an optical disc of a CD standard, the numerical aperture (NA) of an objective lens is around 0.45, and the wavelength of a light source for use is around 785 nm. In addition, as for the recording, ones having 0.50 in approximate is a lot used. Herein, the thickness of a protective substrate for an optical disc of the CD standard is 1.2 mm.

A CD has been widely popularized as an optical information recording medium, and for the last few years, a DVD is popularized. The DVD is increased in its information recording capacity by making the thickness of the protective substrate thinner than the CD and also by miniaturizing the information recording hole.
While a recording capacity of a CD is about 600 to 700 MB (Mega Bite), a DVD has a large recording capacity of about 4.7 GB (Giga Byte), thus being used a lot as a distribution medium to which a moving image such as a movie picture is recorded.

In addition, the optical pickup device for playing back the information from an optical disc of a DVD standard is principally the same as that of the CD. However, since the information recording hole is miniaturized as described above, the optical pickup device employs an objective lens having the NA of around 0.60, and a light source having the wavelength of around 655 nm. Further, as for the recording, ones having 0.65 in approximate is more often used. Herein, the thickness of the protective substrate for an optical disc of the DVD standard is 0.6 mm.

A recording type for the optical disc of the DVD standard is already put to practical use, and there are various standards such as DVD-RAM, DVD-RW/R, DVD+RW/R, and the like. The technical principal of these optical disc is also same as that of the CD standard.
As described above, there has been proposed an optical disc of high density/high capacity.
This optical disc is to use the light source for providing the light having a wavelength of around 405 nm, which is the light source for providing so-called a blue-violet laser.
For such 'optical disc of high density', even if the wavelength to be used is determined, the thickness of the protective substrate, recording capacity, NA, and the like cannot be determined in a single uniform way.
If a way to improve the recording density substantially is selected, the thickness of the protective substrate of an optical disc is reduced, and accordingly the NA is increased. Alternatively, the thickness of the protective substrate and NA can be in the same standard as the conventional optical disc standard. In specific, there is proposed a protective substrate such as further reduced ones having the thickness of 0.1 mm, or ones same with DVD of 0.6 mm.

The optical element to be used in the above-described optical pickup device is mostly formed by an injection molding with a plastic resin or pressure molding with a glass.
Of these, the glass-made optical element is generally small in the refractive-index variance to a temperature change. Therefore, this element can be used in a beam shaping prism disposed nearby a light source which is the heat source. However there is a problem that the manufacturing cost is high. Therefore, it is less employed in each of optical elements of collimator, coupling lens, objective optical element, and the like. On the other hand, the plastic resin-made optical element has a merit that the manufacturing cost is low as it is molded by injection, and thus is used a lot to a large extent. However, since the plastic material has an absorption in the wavelength area to various degrees or another, there is a problem that the optical properties for a use are deteriorated.

Hence, in order to perform a playing back of information (reading) or recording of information at high speed, it is necessary to improve the light amount to surely form a spot of collected light.
For this, a most simple method is to increase the light emitting amount of the diode by raising the power of a laser diode, but due to this if optical properties involved in the use are increasingly deteriorated, a problem arises in that the optical properties as designed cannot be attained. In addition, increase in an atmospheric temperature due to the raise of the laser power becomes a factor that promotes a deterioration of the resin.

Further, if the operation is carried out at high speed, the actuator also operates at high speed, and thus generated heat also becomes a factor that promotes a deterioration of the resin.
Accordingly, there is proposed various efforts to control the change of the optical properties at the time of use.

For example, in Patent Document 1, there is disclosed a technique of blending (b) 0.03 to 1 parts by mass of a hindered amine light-resistant stabilizer, (c) 0.002 to 2 parts by mass of phenol antioxidant, and (d) 0.002 to 1 parts by mass of phosphorus antioxidant, relative to 100 parts by mass of a thermoplastic norbornene resin (for a hydroxide additive of ring-opening polymer of 1,4-methano-1,4,4a,9a-tetrahydrofluorene). However, the stability for light of a resin composition attained according to the method is not sufficient, and thus is not appropriate to be used in an optical pickup device having the blue-violet laser light source. In addition, there is a flaw in transmittance that it is lowered due to a coloring as salt is formed by the phenol antioxidant and the hindered amine light-resistant stabilizer. There are also problems that the foaming at the time of molding is easy to occur, and since the birefringence is poor, an optical component of high density cannot be obtained.

Also, for example in Patent Document 2, there is disclosed a technique to obtain a resin composition excellent in a processing stability, light-resistant stability, thermal resistance, and transparency, by containing a vinyl alicyclic hydrocarbon polymer and a hindered amine light-resistant stabilizer having the number average molecular weight (Mn) of 1,000 to 10,000. According to the method, the foaming at the time of molding and the birefringence are improved as compared to the above-described technique, but still the stability for light is insufficient, and thus is not appropriate to be used in an optical pickup device having the blue-violet laser light source. In addition, this method has a flaw in that white turbidity occurs due to the blue-violet laser light irradiation.

Further, in Patent Document 3, as the resin composition having excellent weather resistance, light resistance, transparency, thermal resistance, and a low dusting characteristic at the time of molding process, and exhibiting excellent optical properties when molded to an optical component, there is disclosed a weather-resistant resin characterized by containing (A) a cyclic polyolefin-based resin, (B) benzotriazole-based UV absorbent having the molecular weight of 300 or more, the vapor pressure at 20°C temperature of 1 × 10⁻⁸ Pa or less, and the 5% weight reducing temperature with a heat loss measurement of 200°C or above, and (C) a hindered amine light stabilizer having the molecular weight of 500 or more, the vapor pressure at 20°C temperature of 1 × 10⁻⁶ Pa or less, and the 5% weight reducing temperature with a heat loss measurement of 250 °C or above. According to the method, the thermal resistance is improved and the foaming at the time of molding is controlled as in the above-described technique, but there is absorption with the benzotriazole-based UV absorbent, and thus is not appropriate to be used in an optical pickup device having the blue-violet laser light source. In addition, there is a flaw that the water absorption is high.

In Patent Document 4, in order to obtain a molded product with no coloration and no color change although irradiated with UV ray for a long period, there is disclosed a technique of mixing pellet A formed from a resin composition containing 100 parts by mass of a vinyl alicyclic hydrocarbon polymer and 0.001 to 2.0 parts by mass of an antioxidant with pellet B formed from a resin composition containing 100 parts by mass of a vinyl alicyclic hydrocarbon polymer and 2 to 20 parts by mass of a light-resistant stabilizer at a ratio of 5 ≤ A/B ≤ 50 by mass, and then melt-molding the resultant. However, the stability at the time of molding is deteriorated, and the transparency of the resin and the stability for the light are both insufficient, thus is not appropriate to be practically used in an optical pickup device using the blue-violet laser light source. In addition, the method is inappropriate for a large-scale production as the manufacturing and molding processes are complicated.

In Patent Document 5, for the first time, there is disclosed a resin composition having an excellent mechanical strength and which does not develop color although irradiated with a ray of light of short wavelength and high intensity such as a blue-violet laser. The resin composition contains (A) polymer having a structural unit from an aliphatic group-containing ethylinically unsaturated monomeric unit which is obtained by reacting an aromatic vinyl monomer under an addition polymerization reaction and then hydrogenating the aromatic ring, and (B) antioxidant having a phosphate ester structure and a phenol structure in a molecule such as 6-[3-(3-t-butyl-4-hydroxy-5-methylphenyl)propoxy]-2,4,8,10-tetrakis-t-butylbenzo[d,f][1.3.2]dioxaphosphepin. However, the optical properties are still not sufficiently stable due to a deterioration of the resin during the use, and since the deterioration specifically occurs nearby the surface, it is easy to deposit a foreign substance by the deterioration, and the light transmittance in a practical use cannot be maintained. Therefore, it is in fact difficult to use this resin composition in the optical pickup device hazing the blue-violet laser light source.
[Patent Document 1] Japanese Unexamined Patent Publication No. H09-268250
[Patent Document 2] WO 01/092412
[Patent Document 3] Japanese Unexamined Patent Publication No. 2001-72839
[Patent Document 4] Japanese Unexamined Patent Publication No. 2003-276047
[Patent Document 5] Japanese Unexamined Patent Publication No. 2004-83813

### DISCLOSURE OF THE INVENTION

It is an object of the present invention to provide a resin composition suitable for an optical element in which the moldability, thermal resistance, mechanical strength, and low birefringence are not impaired, the deterioration is hardly generated although the laser light nearby the UV is used, change in the optical properties during the use is extremely small, particularly the light transmittance is maintained high, and a foreign substance is hardly deposited on a surface of the molded product such as an optical element, also to provide an optical element which can be obtained by molding the resin composition, and an optical pickup device using the optical element.

The present inventors have conducted extensive studies to solve the above problems, and as a result, they have found that a thermoplastic resin composition containing the specific polymer and two kinds of specific optical stabilizers in a specific mass ratio among hindered amine light stabilizer having the molecular weight of 400 to 5,000, can solve the above problems, and thus completed the present invention.

That is, the present invention provides:
[1] A thermoplastic resin composition including Polymer [A-1] represented by Formula (1), Compound [B-1], and Compound [B-2], in which the total amount of Compound [B-1] and Compound [B-2] contained is from 0.3 to 5 parts by mass relative to 100 parts by mass of Polymer [A-1], and the mass ratio [B-1]/[B-2] is from 1/10 to 10/1:

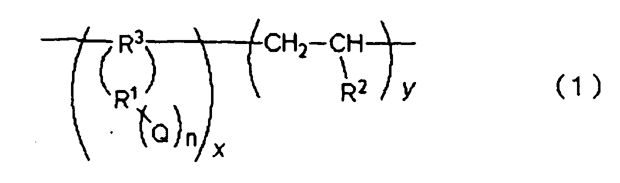

where, x and y each represents a copolymerization ratio and is a real number satisfying 0/100 ≤ y/x ≤ 95/5; n represents a number of a substituent Q and is an integer satisfying 0 ≤ n ≤ 2; R¹ is a 2 + n valent group of at least one or more kind(s) selected from hydrocarbon groups having 2 to 20 carbon atoms; R² is a hydrogen atom or a monovalent group of at least one or more kind(s) selected from hydrocarbon groups having 1 to 10 carbon atom(s); R³ is a divalent group of at least one or more kind(s) selected from hydrocarbon groups having 2 to 10 carbon atom(s); Q is a divalent group of at least one or more kind(s) selected from structures represented by COOR⁰; and R⁰ is a hydrogen atom or a monovalent group of at least one or more kind(s) selected from hydrocarbon groups having 1 to 10 carbon atom(s),
wherein, Compound [B-1] is a hindered amine light stabilizer having the molecular weight of 400 or more to less than 1,000, and Compound [B-2] is a hindered amine light stabilizer having the molecular weight of 1,000 or more to 5,000 or less;

[2] A thermoplastic resin composition including Polymer [A-2] which has an alicyclic structure on at least one moiety of repeated structural units, Compound [B-1], and Compound [B-2], in which the total amount of Compound [B-1] and Compound [B-2] contained is from 0.3 to 5 parts by mass relative to 100 parts by mass of Polymer [A-2], and the mass ratio [B-1]/[B-2] is from 1/10 to 10/1,
   wherein, Compound [B-1] is a hindered amine light stabilizer having the molecular weight of 400 or more to less than 1,000, and Compound [B-2] is a hindered amine light stabilizer having the molecular weight of 1,000 or more.to 5,000 or less;

[3] The thermoplastic resin composition as described in [1] or [2] above, in which Compound [B-1] has a structure represented by Formula (2):

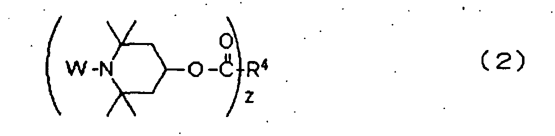

where, W represents a hydrogen atom or a methyl group; R⁴ represents a hydrocarbon group having 4 to 16 carbon atoms; and z is 1 or 2;
[4] The thermoplastic resin composition as described in [1] to [3] above, further including 0.01 to 1 parts by mass of a phosphorus stabilizer, relative to 100 parts by mass of Polymer [A-1] or Polymer [A-2];
[5] The thermoplastic resin composition as described in [1] to [4] above, further including 0.05 to 5 parts by mass of a hydrophilic stabilizer, relative to 100 parts by mass of Polymer [A-1] or Polymer [A-2];
[6] A molded product which is obtained by molding the thermoplastic resin composition of [1] to [5] above;
[7] An optical element which is obtained by molding the thermoplastic resin composition of [1] to [5] above;
[8] An optical element which is obtained by molding the thermoplastic resin composition of [1] to [5] above, and the optical element is used as an optical component useful for a laser optical system having the wavelength of 350 to 450 nm;

[9] The optical element as described in [7] or [8] above, further including an optical path difference providing structure;
[10] The optical element as described in [7] to [9] above, in which the optical element is used for an optical pickup device;
[11] The optical element as described in [10] above, in which the optical element is used for an optical pickup device which employs a plurality of light sources of different wavelength and is capable of recording or playing back information on an optical information recording medium of various kinds having a different substrate thickness;
[12] The optical element as described in [10] or [11], in which the optical element is used for an optical pickup device having the light sources which at least one of the wavelength is from 390 nm to 420 nm;
[13] The optical element as described in [7] to [12], in which at least one part of the optical element is held by an actuator to be movable; and
[14] An optical pickup device having the optical element of [10] to [13] above.

The thermoplastic resin composition of the present invention has excellent optical properties, hardly generates the deterioration when a laser light of the region nearby UV is used, possesses the optical properties changing in the extremely small extent during the use, and it is capable of maintaining a high ray transmittance and can be suitably used as an optical element.
Further, since a foreign substance hardly deposits on a surface of the optical element obtained by molding the thermoplastic resin composition of the present invention, the transmission of light is not interrupted and can be suitably used for an optical pickup device or the like, and its industrial value is extremely high.

### BRIEF DESCRIPTION OF THE DRAWINGS

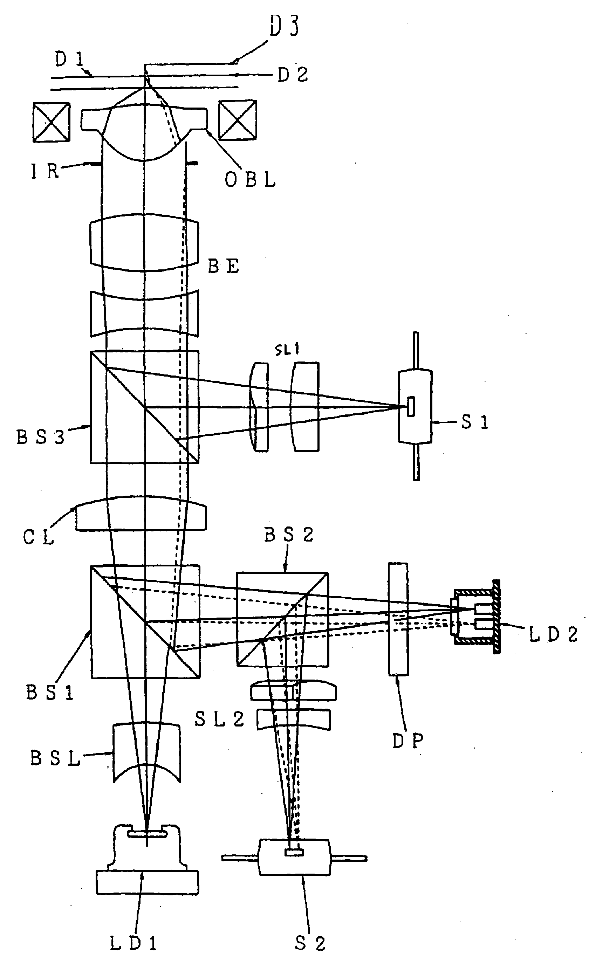

[Fig. 1] Fig. 1 is a view schematically showing an exemplary optical pickup device related to the present invention.

- LD 1: first light source
- LD 2: second light source, third light source
- S1: sensor
- S2: sensor
- SL 1: sensor lens
- SL 2: sensor lens
- DP: diffraction plate
- BS 1: beam splitter
- BS 2: beam splitter
- BS 3: beam splitter
- CL: collimator
- IR: iris
- OBL: objective optical element
- D1: optical disc {'high density optical disc'}
- D2: optical disc (DVD)
- D3: optical disc (CD)
- BE: beam expander
- BSL: beam shaper

### BEST MODE FOR CARRYING OUT THE INVENTION

### [Polymer [A-1] and Polymer [A-2]

Polymer [A-1] contained in the thermoplastic resin composition of the present invention may be anything as long as it has an alicyclic structure on at least one moiety of repeated structural units, and particularly as Polymer [A-1], a polymer having the structure represented by the following Formula (1), that is Polymer [A-2] is preferable.

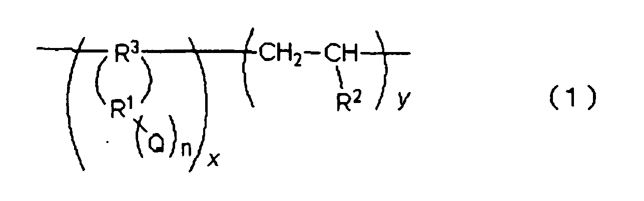

Where, in Formula (1), x and y each represents a copolymerization ratio and is a real number satisfying 0/100 ≤ y/x ≤ 95/5, and n represents a number of a substituent Q and is an integer satisfying 0 ≤ n ≤ 2. R¹ is a 2 + n valent group of at least one or more kind(s) selected from hydrocarbon groups having 2 to 20 carbon atoms; R² is a hydrogen atom or a monovalent group of at least one or more kind(s) selected from hydrocarbons having 1 to 10 carbon atom(s); R³ is a divalent group of at least one or more kind(s) selected from hydrocarbons having 2 to 10 carbon atom(s); Q is a divalent group of at least one or more kind(s) selected from structures represented by COOR⁰; and R⁰ is selected from the groups consisting of a hydrogen atom and a hydrocarbon group having 1 to 10 carbon atom(s).

In the above Formula (1), R¹ is preferably a divalent group of at least one or more selected from the group consisting of hydrocarbon groups having 2 to 12 carbon atoms, more preferably a divalent group when n = 0 which is represented by Formula (3), and most preferably a divalent group in which the p is 0 or 1 in the above Formula (3). The structure of R¹ may be one kind or two or more kinds may be used in combination.

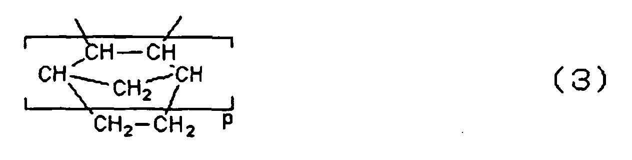

Where, in Formula (3), p is an integer of 0 to 2.
In the above Formula (1), examples of R² include hydrogen, a methyl group, an ethyl group, an n-propyl group, an i-propyl group, an n-butyl group, a 2-methylpropyl group, and the like, preferably hydrogen and/or a methyl group, most preferably hydrogen.
In the above Formula (1), examples of R³ when n = 0 include the following Formula (4) to (6).

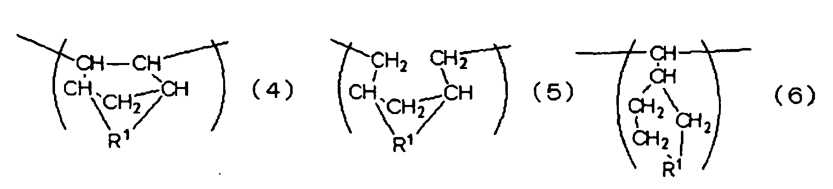

Where, in Formula (4) to (6), R¹ indicates the same as in Formula (1).

In the above Formula (1), n is preferably 0.
The type of copolymer in the present invention is not at all limited, and well-known various copolymer types such as a random copolymer, a block copolymer, an alternating copolymer, and the like, can be employed, but preferably is a random copolymer.
When a resin used as a main component has the above structure, a high-precision optical component having excellent optical properties such as transparency, refractive index, birefringent index, and the like, can be obtained.

### (Structural Example of Polymer [A-2])

When the structure of Formula (1) is classified, it is divided into the following (1) to (4) categories. That is,
(1) A copolymer of ethylene or α-olefin and cyclic olefin;
(2) A ring-opening polymer or its hydrogenated product;
(3) A hydrogenated product of a polystyrene derivative; and
(4) Others.

### (1) The copolymer of ethylene or α-olefin and cyclic olefin

The copolymer of ethylene or α-olefin and cyclic olefin is the cyclic olefin copolymer represented by Formula (7), and it contains of Structural unit (A) derived from ethylene or straight-chain α-olefin or branched-chain α-olefin having 3 to 30 carbon atoms and Structural unit (B) derived from a cyclic olefin.

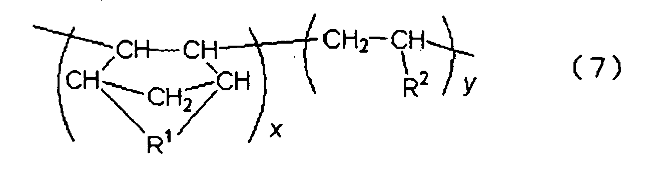

In Formula (7), R¹ is a divalent group of at least one or more kind(s) selected from hydrocarbon groups having 2 to 20 carbon atoms; R² is a hydrogen atom or a monovalent group of at least one or more kind(s) selected from hydrocarbon groups having 1 to 5 carbon atom(s); and x and y each represents a copolymerization ratio satisfying 5/95 ≤ y / x ≤95/5, preferably 50/50 ≤ y / x ≤ 95/5, more preferably 55/45 ≤ y / x ≤ 80/20.

### (1-1) Structural unit (A) derived from ethylene or α-olefin

The Structural unit (A) derived from ethylene or α-olefin in the present invention which forms the copolymer of ethylene or α-olefin and cyclic olefin, is a structural unit derived from ethylene or straight-chain α-olefin or branched-chainα-olefin having 3 to 30 carbon atoms as follows.
Specific examples include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like. Among these, ethylene is preferable. These structural units derived from α-olefin may be included in 2 or more kinds within the range that the purpose of the invention is not impaired.

### (1-2) Structural unit (B) derived from a cyclic olefin

Structural unit (B) derived from a cyclic olefin relates to the present invention which forms the copolymer of ethylene or α-olefin and cyclic olefin, is at least one or more kind(s) selected from structural units derived from a cyclic olefins represented by the following Formula (8), Formula (9), and Formula (10).
Firstly, Structural unit (B) derived from a cyclic olefin represented by Formula (8) has the following structure.

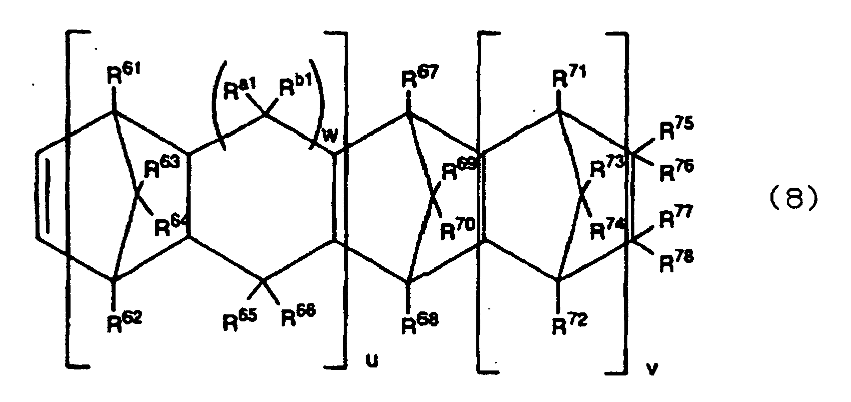

In Formula (8), u is 0 or 1; v is 0 or a positive integer; and w is 0 or 1. When w is 1, a ring represented by incorporating w is a 6-membered ring, and when w is 0, the ring is a 5-membered ring. R⁶¹ to R⁷⁸, and R^{a1} and R^{b1} may be same with or different from each other, and is a hydrogen atom, a halogen atom, or a hydrocarbon group.
Herein, the halogen atom is a fluorine atom, a chlorine atom, a bromine atom, or an iodine atom. Examples of the hydrocarbon group generally include an alkyl group having 1 to 20 carbon atom(s), an alkyl halide group having 1 to 20 carbon atom(s), a cycloalkyl group having 3 to 15 carbon atoms, and an aromatic hydrocarbon group.

More specific examples of the alkyl group include methyl, ethyl, propyl, isopropyl, amyl, hexyl, octyl, decyl, dodecyl, and octadecyl. An example of the alkyl halide group includes a group in which above alkyl group having 1 to 20 carbon atom(s) is substituted with one or more halogen atom(s). As the cycloalkyl group, a cyclohexyl group is exemplified. As the aromatic hydrocarbon group, phenyl and naphthyl are exemplified.

In the above Formula (8), R⁷⁵ and R⁷⁶, R⁷⁷ and R⁷⁸, R⁷⁵ and R⁷⁷, R⁷⁶ and R⁷⁸ R⁷⁵ and R⁷⁸, or R⁷⁶ and R⁷⁷ may be bonded (jointly) to each other to form a monocyclic or polycyclic ring, and thus-formed monocyclic or polycyclic ring may have a double bond. However, from the viewpoint of thermal resistance, the polycyclic is preferable than the monocyclic since a copolymer of high Tg can be obtained with a smaller content of the polycyclic. Also, there is an advantage that the small amount of cyclic olefin is introduced for a production. Specific examples of the monocyclic or polycyclic formed herein include the followings.

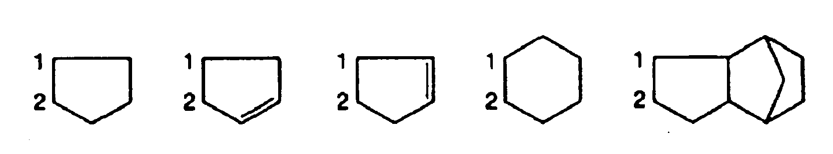

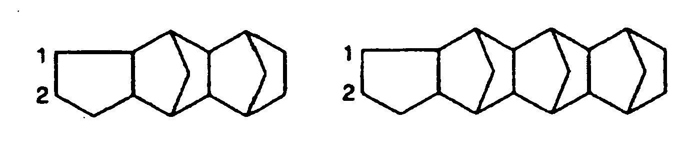

In the above examples, carbon atoms numbered 1 or 2 respectively represent a carbon atom to which R⁷⁵ (R⁷⁶) or R⁷⁷ (R⁷⁸) is bonded.
Additionally, an alkylidene group may be formed with R⁷⁵ and R⁷⁶ or R⁷⁷ and R⁷⁸. The alkylidene group is generally an alkylidene group having 2 to 20 carbon atoms, and specific examples of the alkylidene group include ethylidene, propylidene, and isopropylidene.
Next, Structural unit (B) derived from a cyclic olefin represented by Formula (9) has the following structure.

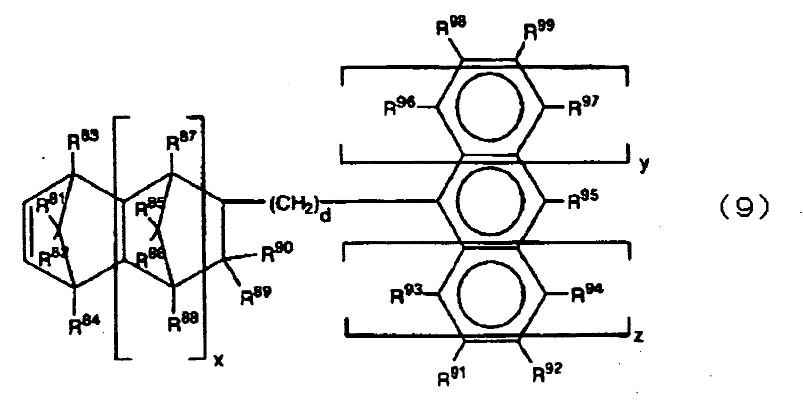

In Formula (9), x and d each is an integer of 0 or 1 or more; y and z each is 0, 1, or 2; and R⁸¹ to R⁹⁹ may be same with or different from each other and each is a hydrogen atom, a halogen atom, an aliphatic hydrocarbon group, an aromatic hydrocarbon group, or an alkoxy group, where a carbon atom to which R⁸⁹ and R⁹⁰ are bonded, and a carbon atom to which R⁹³ is bonded or a carbon atom to which R⁹¹ is bonded may be bonded directly or via an alkylene group having 1 to 3 carbon atom(s), and when y = z = 0, R⁹⁵ and R⁹², or R⁹⁵ and R⁹⁹ may be bonded to each other to form a monocyclic or polycyclic aromatic ring.

As the halogen atom, same halogen atoms mentioned in the above Formula (8) can be exemplified.
The aliphatic hydrocarbon group is exemplified by an alkyl group having 1 to 20 carbon atom(s), a cycloalkyl group having 3 to 15 carbon atoms.
More specific example of the alkyl group include methyl, ethyl, propyl, isopropyl, amyl, hexyl, octyl, decyl, dodecyl, and octadecyl. As the cycloalkyl group, cyclohexyl is included.
Examples of the aromatic hydrocarbon group include an aryl group and an aralkyl group, and specifically phenyl, tolyl, naphthyl, benzyl, and phenylethyl.
Examples of the alkoxy group include methoxy, ethoxy, and propoxy. Herein, a carbon atom to which R⁸⁹ and R⁹⁰ are bonded, and a carbon atom to which R⁹³ is bonded or a carbon atom to which R⁹¹ is bonded may be bonded directly or via an alkylene group having 1 to 3 carbon atom(s). That is, when the above two carbon atoms are bonded via an alkylene group, each of R⁸⁹ and R⁹³, or R⁹⁰ and R⁹¹ jointly forms an alkylene group selected from any of a methylene group (-CH₂-), an ethylene group(-CH₂CH₂-), and a propylene group (-CH₂CH₂CH₂-).

Further, when y = z = 0, R⁹⁵ and R⁹², or R⁹⁵ and R⁹⁹ may be bonded to each other to form a monocyclic or polycyclic aromatic ring. When y=Z=0, specific examples of the aromatic ring formed with R⁹⁵ and R⁹² include the following aromatic rings.
However, from the viewpoint of thermal resistance, the polycyclic is preferable than the monocyclic since a copolymer of high Tg can be obtained with a smaller content of the polycyclic. Also, there is an advantage that the small amount of cyclic olefin is introduced for a production.

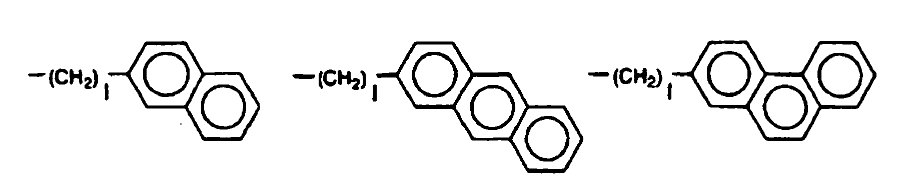

Herein, I is same as d in Formula (9) above.
Next, Structural unit (B) derived from a cyclic olefin represented by Formula (10) has the following structure.

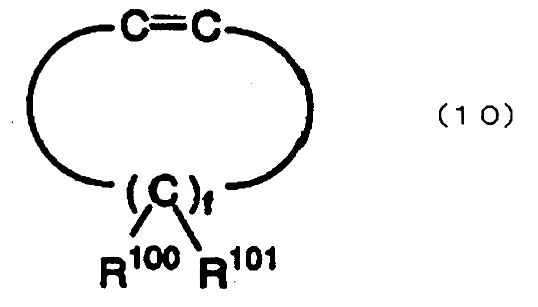

In Formula (10), R¹⁰⁰ and R¹⁰¹ may be same with or different from each other and each is a hydrogen atom or a hydrocarbon group having 1 to 5 carbon atom(s); and f satisfies 1 ≤ f ≤ 18.
Examples of the hydrocarbon group having 1 to 5 carbon atom(s) include preferably an alkyl group, an alkyl halide group, and a cyclo alkyl group. Specific examples are as shown in the specific examples of R⁶¹ to R⁷⁸ in the above Formula (8).

Specific examples of Structural unit (B) derived from a cyclic olefin represented by the above Formula (8), (9), or (10) include a bicyclo-2-heptene derivative (a bicyclohepto-2-ene derivative), a tricyclo-3-decene derivative, a tricyclo-3-undecene derivative, a tetracyclo-3-dodecene derivative, a pentacyclo-4-pentadecene derivative, a pentacyclopentadecadiene derivative, a pentacyclo-3-pentadecene derivative, a pentacyclo-4-hexadecene derivative, a pentacyclo-3-hexadecene derivative, a hexacyclo-4-heptadecene derivative, a heptacyclo-5-eicosene derivative, a heptacyclo-4-eicosene derivative, a heptacyclo-5-heneicosene derivative, a octacyclo-5-dococene derivative, a nonacyclo-5-pentacosene derivative, a nonacyclo-6-hexacosene derivative, a cyclopentadiene-acenaphtylene adduct, a 1,4-methano-1,4,4a,9a-tetrahydrofluorene derivative, a 1,4-methano-1,4,4a,5,10,10a-hexahydroanthracene derivative, a cycloalkylene derivative having 3 to 20 carbon atoms, and the like.

Among these, a tetracyclo [4. 4. 0 . 1^{2,5}. 1^{7,10}]-3-dodecene derivative and a hexacyclo [6. 6. 1. 1^{3,6}. 1^{10,13}. 0^{2,7}. 0^{9,14}]-4-heptadecene derivative are preferable, and a tetracyclo [4. 4. 0. 1^{2,5}. 1^{7,10}] -3-dodecene derivative is particularly preferable.

The cyclic olefin represented by the above Formula (8) or (9) can be produced by reacting cyclopentadiene with an olefin having a corresponding structure under a Diels-Alder reaction.
Structural unit (B) derived from a cyclic olefin represented by the above Formula (8), (9), or (10) may be included in two or more kinds.
Additionally, ones polymerized using the above monomer can be modified according to its necessity, and in such case, a structure of the structural unit derived from the monomer can be modified. For example, according to a hydrogenation treatment, a benzene ring in the structural unit derived from the monomer can be modified a cyclohexyl ring under the condition.

The type of copolymer in the present invention is not at all limited, and well-known various copolymer types such as a random copolymer, a block copolymer, an alternating copolymer, and the like, can be employed, but preferably is a random copolymer.

### (2) A ring-opening polymer or its hydrogenated product

The ring-opening polymer or its hydrogenated product is a cyclic olefin polymer represented by Formula (5) among the structural groups exemplified as the preferable examples in the above Formula (1).
The cyclic olefin polymer may have a polar group. Examples of the polar group include a hydroxyl group, a carboxyl group, an alkoxy group, an epoxy group, a glycidyl group, an oxycarbonyl group, a carbonyl group, an amino group, an ester group, and the like.

The cyclic olefin polymer is generally obtained by polymerizing a cyclic olefin, specifically by ring-open polymerizing an alicyclic olefin, and for example, the cyclic olefin polymer having a polar group is obtained by introducing a compound having a polar group in the cyclic olefin polymer by a degeneration reaction, or copolymerizing a monomer including a polar group as the copolymer component.
The alicyclic olefin used to obtain the cyclic olefin polymer includes specifically the following alicyclic olefins.

A norbornene monomer such as bicyclo[2.2.1]-hepto-2-ene(the trivial name: norbornene), 5-methyl-bicyclo[2.2.1]-hepto-2-ene, 5,5-dimethyl-bicyclo[2.2.1]-hepto-2-ene, 5-ethyl-bicyclo[2.2.1]-hepto-2-ene, 5-butyl-bicyclo[2.2.1]-hepto-2-ene, 5-hexyl-bicyclo[2.2.1]-hepto-2-ene, 5-octyl-bicyclo[2.2.1]-hepto-2-ene, 5-octadecyl-bicyclo[2.2.1]-hepto-2-ene, 5-ethylidene-bicyclo[2.2.1]-hepto-2-ene, 5-methylidene-bicyclo[2.2.1]-hepto-2-ene, 5-vinyl-bicyclo[2.2.1]-hepto-2-ene, 5-propenyl-bicyclo[2.2.1]-hepto-2-ene, 5-methoxy-carbinyl-bicyclo[2.2.1]-hepto-2-ene, 5-cyano-bicyclo[2.2.1]-hepto-2-ene, 5-methyl-5-methoxycarbonyl-bicyclo[2.2.1]-hepto-2-ene, 5-ethoxycarbonyl-bicyclo[2.2.1]-hepto-2-ene, bicyclo[2.2.1]-hepto-5-enyl-2-methylpropionate, bicyclo[2.2.1]-hepto-5-enyl-2-methyloctanate, bicyclo[2.2.1]-hepto-2-ene-5,6-dicarboxylic acid anhydride, 5-hydroxymethylbicyclo[2.2.1]-hepto-2-ene, 5,6-di(hydroxymethyl)-bicyclo[2.2.1]-hepto-2-ene, 5-hydroxy-i-propylbicyclo[2.2.1]-hepto-2-ene, 5,6-dicarboxy-bicyclo[2.2.1]-hepto-2-ene, bicyclo[2.2.1]-hepto-2-ene-5,6-dicarboxylic acid imide, 5-cyclopentyl-bicyclo[2.2.1]-hepto-2-ene, 5-cyclohexyl-bicyclo[2.2.1]-hepto-2-ene, 5-cyclohexenyl-bicyclo[2.2.1]-hepto-2-ene, 5-phenyl-bicyclo[2.2.1]-hepto-2-ene, tricyclo[4. 3. 0. 1^{2.5}]deca-3,7-diene (the trivial name: dicyclopentadiene), tricyclo[4. 3. 0. 1^{2.5}]deca-3-ene, tricyclo[4. 4. 0. 1^{2.5}] undeca-3,7-diene, tricyclo[4. 4. 0. 1^{2,5}]undeca-3,8-diene, tricyclo[4. 4. 0.1^{2.5}]undeca-3-ene, tetracyclo[7.4.0.1^{10,13}. 0^{2,7}]-trideca-2,9,6-11-tetraene (the trivial name:1,4-methano-1,4,4a, 9a-tetrahydrofluorene), tetracyclo[8.4.0.1^{11,14}. 0^{3,8}]-tetradeca-3,5,7,12-11-tetraene (the trivial name: 1,4-methano-1, 4, 4a, 5, 10, 10a-hexahydroanthracene), tetracyclo[4.4.0.1^{2,5}.1^{7,10}]-dodeca-3-ene (the trivial name: tetracyclododecene), 8-methyl-tetracyclo[4.4.0.1^{2,5}. 1^{7,10}]-dodeca-3-ene, 8-ethyl-tetracyclo[4.4.0.1^{2,5}.1^{7,10}]-dodeca-3-ene, 8-methylidene-tetracyclo[4.4.0.1^{2,5}.1^{7,10}] -dodeca-3-ene, 8-ethylidene-tetracyclo[4.4.0.1^{2,5}.1^{7,10}]-dodeca-3-ene, 8-vinyl-tetracyclo[4.4.0.1^{2,5}.1^{7,10}]-dodeca-3-ene,8-propenyl-tetracyclo[4.4.0.1^{2,5}.1^{7,10}]-dodeca-3-ene, 8-methoxycarbonyl-tetracyclo[4.4.0.1^{2,5}.1^{7,10}]-dodeca-3-ene, 8-methyl-8-methoxycarbonyl-tetracyclo[4.4.0. 1^{2,5}.1^{7,10}] -dodeca-3-ene, 8-hydroxymethyl-tetracyclo[4.4.0.1^{2,5}.1^{7,10}] -dodeca-3-ene, 8-carboxy-tetracyclo[4.4.0.1^{2,5}.1^{7,10}]-dodeca-3-ene, 8-cyclopentyl-tetracyclo[4.4.0.1^{2,5}.1^{7,10}]-dodeca-3-ene, 8-cyclohexyl-tetracyclo[4.4.0.1^{2,5}.1^{7,10}]-dodeca-3-ene, 8-cyclohexenyl-tetracyclo[4.4.0.1^{2,5}.1^{7,10}] -dodeca-3-ene, 8-phenyl-tetracyclo[4.4.0.1^{2,5}.1^{7,10}]-dodeca-3-ene, pentacyclo[6.5.1.1^{3,6}. 0^{2,7}. 0^{9,13}] pentadeca-3,10-diene, and pentacyclo[7.4.0.1^{3,6}.1^{10,13}.0^{2,7}]-pentadeca-4,11-diene;

a mono-cycloalkene such as cyclobutene, cyclopentene, cyclohexene, 3,4-dimethylcyclopentene, 3-methylcyclohexene, 2-(2-methylbuthyl)-1-cyclohexene, cyclooctene, 3a, 5, 6, 7a-tetrahydro-4,7-methano-1H-indene, and cycloheptene;
a vinyl alicyclic hydrocarbon monomer such as vinyl cyclohexene and vinyl cyclohexane; and an alicyclic conjugated diene monomer such as cyclopentadiene, cyclohexadiene.

The alicyclic olefin may be used each independently or in combination of two or more kinds. Additionally, a copolymerizable monomer can be copolymerized according to its necessity. Specifically, the following monomers are included.
Ethylene or α-olefin having 2 to 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like.
A cycloolefin such as cyclobutene, cyclopentene, cyclohexene, 3,4-dimethylcyclopentene, 3-methylcyclohexene, 2-(2-methylbutyl)-1-cyclohexene, cyclooctene, 3a,5,6,7a-tetrahydro-4,7-methano-1H-indene.
A nonconjugated diene such as 1,4-hexadiene, 4-methyl-1,4-hexadiene, 5-methyl-1,4-hexadiene, 1,7-octadiene.
These monomer can be used each independently or in combination of two or more kinds.

A polymerization method of alicyclic olefin is not particularly limited and can be carried out in accordance with a well-known method. These ring-opening polymerization products are preferably hydrogenated for being used, considering the thermal resistance, the stability, and the optical properties. As for the hydrogenation method, well-known methods can be used.

### (3) A hydrogenated product of a polystyrene derivative

The hydrogenated product of a polystyrene derivative is a hydrogenated product of a polymer obtained from polystyrene or its derivatives as a monomer.
Examples of the vinyl aromatic compound which can used as the monomer include styrenes such as styrene, α-methylstyrene, α-ethylstyrene, α-propylstyrene, α-isopropylstyrene, α-t-butylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, monochlorostyrene, dichlorostyrene, monofluorostyrene 4-phenylstyrene, and the like.

Specific examples of the vinyl alicyclic hydrocarbon compound which can be used as the monomer include the following compounds:
Vinylcyclohexane such as vinylcyclohexane, 3-methylisopropenylcyclohexane, and the like; and
Vinylcyclohexene such as 4-vinylcyclohexene, 4-isopropenylcyclohexene, 1-methyl-4-vinylcyclohexene, 1-methyl-4-isopropenylcyclohexene, 2-methyl-4-vinylcyclohexene, 2-methyl-4-isopropenylcyclohexene.

In the present invention, above monomer and the other copolymerizable monomer may be copolymerized. Specific examples of the copolymerizable monomer include the following monomers:
α-olefin monomers such as ethylene, propylene, isobutene, 2-methyl-1-butene, 2-methyl-1-pentene, 4-methyl-1-pentene, and the like;
cyclopentadiene monomers such as cyclopentadiene, 1-methylcyclopentadiene, 2-methylcyclopentadiene, 2-ethylcyclopentadiene, 5-methylcyclopentadiene, 5,5-dimethylcyclopentadiene, dicyclopentadiene, and the like;
monocyclic olefin monomers such as cyclobutene, cyclopentene, cyclohexane, and the like;
conjugated diene monomers such as butadiene, isoprene, 1,3-pentadiene, furane, thiophene, 1,3-cyclohexadiene, and the like;
nitrile monomers such as acrylonitrile, methacrylonitrile, α-chloroacrylonitrile, and the like;

(meta)acrylate ester monomers such as methyl methacrylate, ethyl methacrylate, propyl methacrylate, butyl methacrylate, methyl acrylate, ethyl acrylate, propyl acrylate, butyl acrylate; unsaturated fatty acid monomers such as acrylic acid, methacrylic acid, maleic acid anhydride;
heterocyclic ring-containing vinyl compound monomers such as N-vinylcarbazole and N-vinyl-2-pyrolidone; phenylmaleimide; and methylvinylether.

From the viewpoints of thermal resistance, low birefringence, and mechanical strength, the mixture of above monomer used polymerization contains generally a vinyl aromatic compound and/or a vinyl alicyclic hydrocarbon compound in the amount of 50 mass% or more, preferably from 70 to 100 mass%, even more preferably from 80 to 100 mass%. The monomer mixture may contain both the vinyl aromatic compound and the vinyl alicyclic hydrocarbon compound.

### (4) Others

Specific examples of the other cyclic olefin polymer include a ring-opening polymer of a norbornene monomer, an addition polymer of a norbornene monomer, an addition polymer of a norbornene monomer with a vinyl compound such as ethylene or α-olefin, a polymer of monocyclic cycloalkene, a polymer of alicyclic conjugated diene monomer, a polymer of vinyl alicyclic hydrocarbon monomer, an aromatic olefin polymer, and the like, but the structure which is not contained in the above (1) to (3) may also be optionally selected within the range of Formula (1). Examples include the ones interrelated to (1) to (3), or copolymerized with a well-known copolymerizable monomer.

The type of copolymer in the present invention is not at all limited, and well-known various copolymer types such as a random copolymer, a block copolymer, an alternating copolymer, and the like, can be employed, but preferably is a random copolymer.
Among the four kinds of polymers classified into the above mentioned (1) to (4), (1) the copolymer of ethylene or α-olefin, and cyclic olefin is preferable, and an ethylene·tetracyclo[4.4.0.1^{2,5}. 1^{2,5}. 1^{7,10}]-3-dodecene copolymer is most preferable, from the viewpoint of optical properties.

### (Other structure capable of being the part of a main chain)

The polymer used in the present invention may have a repeated structural unit derived from the other copolymerizable monomer within the range of not inhibiting the preferred properties of the product obtained by the molding method of the present invention, according to its necessity. The copolymerization ratio is not limited, but preferably is 20 mol% or less and more preferably 0 to 10 mol%, and if the copolymerization amount is 20 mol% or less, a high precision optical component can be obtained without impairing the optical properties. In addition, the kind of copolymerization is not limited.

### (Molecular weight of Polymer [A-1] and Polymer [A-2])

The molecular weight of Polymer [A-1] and Polymer [A-2] used in the present invention is not limited, but the limiting viscosity [n] measured in the decalin at 135 °C is preferably from 0.03 to 10 dl/g, more preferably from 0.05 to 5 dl/g, most preferably from 0.1 to 2 dl/g. When [η] is 10 dl/g or lower, an excellent moldability can be obtained, and when [η] is higher than 0.03 dl/g, the mechanical strength of the moldability is not impaired and thus is preferable.

### (Glass transition temperature of Polymer [A-1] and Polymer [A-2])

The glass transition temperature (Tg) of Polymer [A-1] and Polymer [A-2] used in the present invention is not particularly limited, but is from 50 to 240 °C, preferably from 50 to 160 °C, more preferably from 100 to 150 °C or below. When the glass transition temperature is 50 °C or higher, during the use of the molded product as an optical component, a sufficient thermal resistance can be obtained. Further, when the glass transition temperature is 240 °C or below, an excellent moldability is obtained.
As for the measuring method of the glass transition temperature, a well-known method may be applied, and the measuring apparatus is not limited, but for example, the differential scanning calorimeter (DSC) can be used to measure the glass transition temperature of thermoplastic resin. For example, a method of measuring with the use of DSC-20 manufactured by SEIKO Corporation and at the rate of the temperature increase of 10 °C/minute, is exemplified.
Such polymers can be produced according to the method suitably selected from, for example, (1) Japanese Unexamined Patent Publication Nos. S60-168708, S61-120816, S61-115912, S61-115916, S61-271308, S61-272216, S62-252406, and S62-252407 for the copolymer of ethylene or α-olefin and cyclic olefin, (2) Japanese Unexamined Patent Application Publication Nos. S60-26024, H09-268250, S63-145324, and 2001-72839 for the ring-opening polymer or its hydrogenated product, and (3) WO 01/092412, and Japanese Unexamined Patent Publication Nos. 2003-276047 and 2004-83813 for the hydrogenated product of a polystyrene derivative.

In the process for producing the above polymer, at least once, by contacting a hydrogenation catalyst and hydrogen into a system containing the polymer or the polymer with the monomer which is a starting material, and then hydrogenerating at least one part of an unsaturated bond included in the polymer and/or monomer, it is possible to improve optical properties of the polymer such as the thermal resistance, transparency. Hereat, the hydrogeneration so-called a hydrogenation can be carried out in accordance with the well-known conventional method.

### [Compound [B-1] and Compound [B-2]]

Compound [B-1] and Compound [B-2] used in the present invention are hindered amine light stabilizers having the molecular weight of 400 to 5,000, and examples include the followings:

Bis(2,2',6,6'-tetramethyl-4-piperidyl)sebacate, dimethyl succinate/1-(2-hydroxyethyl)-4-hydroxy-2,2,6,6-tetramethylpiperidine polycondensation product, poly[6-(1,1,3,3-tetramethylbutyl)imino-1,3,5-triazine-2,4-diyl][(2,2,6,6-tetrametyl-4-piperidyl)imino]hexamethylene[(2,2,6,6-tetrametyl-4-piperidyl)imino], tetrakis(2,2,6,6-tetrametyl-4-piperidyl)-1,2,3,4-butanetetracarboxylate, bis-(1,2,6,6-pentamethyl-4-piperidyl)-2-(3,5-di-ter-butyl-4-hydroxybenzyl)-2-n-butylmalonate, 1,1'-(1,2-ethanediyl)bis(3,3,5,5-tetramethylpiperadinone), (mixed 2,2,6,6-tetramethyl-4-piperidyl/tridecyl)-1,2,3,4-butanetetracarboxylate, (mixed 1,2,2,6,6-pentamethyl-4-piperidyl/tridecyl)-1,2,3,4-butanetetracarboxylate, mixed {2, 2, 6, 6-tetramethyl-4-piperidyl/B, B, B', B'-tetramethyl-3, 9-[2,4,8,10-tetraoxaspiro(5,5)undecane]diethyl}-1,2,3,4-butanetetracarboxylate, mixed {1,2,2,6,6-pentamethyl-4-piperidyl/B, B, B', B'-tetramethyl-3,9-[2,4,8,10-tetraoxaspiro(5,5)undecane]diethyl}-1,2,3,4-butanetetracarboxylate, N,N'-bis(3-aminopropyl)ethylendiamine/2,4-bis[N-butyl-N-(1,2,2,6,6-pentamethyl-4-piperidyl)amino]-6-chloro-1,3,5-triazine condensation product, poly[6-N-morphoryl-1,3,5-triazine-2,4-diyl] [2,2,6,6-tetramethyl-4-piperidyl)imino]hexamethylene[(2,2,6,6-tetramethyl-4-piperidyl)imino], a condensation product of N,N'-bis(2,2,6,6-tetramethyl-4-piperidyl)hexamethylendiamine and 1,2-dibromoethan, [N-(2,2,6,6-tetramethyl-4-piperidyl)-2-methyl-2-(2,2,6,6-tetramethyl-4-piperidyl)imino] propion amide, and the like.

In the present invention, by using the hindered amine light stabilizer in the particular molecular weight range, in combination of at least two or more kinds, excellent effects such that the excellent optical properties are not impaired, extremely high light-resistant stability is obtained for a long period of time, and a foreign substance hardly deposits on a surface of the optical element obtained by molding the thermoplastic resin composition of the present invention, can be obtained.

Particularly, Compound [B-1] is preferably a hindered amine light stabilizer having the molecular weight of 400 or more to less than 1,000, and Compound [B-2] is preferably a hindered amine light stabilizer having the molecular weight of 1,000 or more to less than 5,000, and the total amount of Compound [B-1] and Compound [B-2] in the thermoplastic resin composition of the present invention are preferably included such to give 0.3 to 5 parts by mass, preferably 0.5 to 4 parts by mass, and more preferably 1 to 3 parts by mass relative to 100 parts by mass of Polymer [A-1] or Polymer [A-2].
When the total amount of Compound [B-1] and Compound [B-2] in the thermoplastic resin composition of the present invention is 0.3 parts by mass or more, the light-resistant property can be provided to the polymer, and when 5 parts by mass or less, the optical properties such as transparency and the like are not impaired and thus preferable. Further, in the present invention, when the mass ratio of Compounds [B-1] and [B-2], in other words [B-1]/[B-2], is 1/10 to 10/1, or more preferably 1/5 to 5/1, more preferred light-resistant property can be obtained.

Specific examples of Compound [B-1] which can be used in the present invention include 2,2,6,6-tetramethyl-4-piperidylstearate, 1,2,2,6,6-pentamethyl-4-piperidylstearate, 2,2,6,6-tetramethyl-4-piperidylbenzoate, a reaction product of decanedioxidebis (2,2,6,6-tetramethyl-1-(octyloxy)-4-piperidinyl)ester and 1,1-dimethylethylhydroperoxide and octane, bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-butyl-2-(3,5-di-ter-butyl-4-hydroxybenzyl)malonate, N,N'-bis(2,2,6,6-tetramethyl-4-piperidyl)hexamethylendiamine, methyl 1,2,2,6,6-pentamethyl-4-piperidylsebacate, a condensation product of 2,2,6,6-tetramethyl-4-piperidinol and tridecylalcohol and 1,2,3,4-butane tetracarboxylic acid, tetrakis(2,2,6,6-tetrametyl-4-piperidyl)1,2,3,4-butanetetracarboxylate, tetrakis(1,2,2,6,6-pentametyl-4-piperidyl)-1,2,3,4-butanetetracarboxylate, and a condensation product of 1,2,2,6,6-pentamethyl-4-piperidinol and tridecyl alcohol and 1,2,3,4-butane tetracarboxylic acid.
Additionally, as Compound [B-2], the compound represented by Formula (2) is preferable.

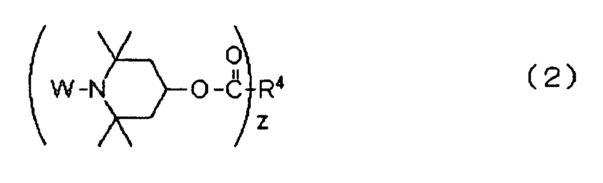

In Formula (2), W is a hydrogen atom or a methyl group, R⁴ is a hydrocarbon group having 4 to 16 carbon atoms, and z is 1 or 2.

Specific examples of Compound [B-2] include poly[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino], dimethyl succinate-1-(2-hydroxymethyl)-4-hydroxy-2,2,6,6-tetramethylpiperidine polycondensation product, poly[6-N-morphoryl-1,3,5-triazine-2,4-diyl][(2,2,6,6-tetramethyl-4-piperidyl)imino]hexamethylene[(2,2,6,6-tetramethyl-4-piperidyl)imino], and the like.

As the particularly preferred embodiment of the present invention, a case where bis(2,2',6,6'-tetramethyl-4-piperidyl)sebacate having the molecular weight of 481 and poly[6-(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino] having the molecular weight of 2,000 to 3,100 are used as Compound [B-1] and Compound [B-2] respectively, can be exemplified.

The hindered amine light stability can be obtained from the market and examples of Compound [B-1] include TINUVIN770DF, TINUVIN765, TINUVIN144, and TINUVIN123S prepared by Ciba-Geigy corporation.; CYASORB UV-3853 and CYASORB UV-3765 prepared by Cytec Industries Inc.; Uvinu14049H and Uvinu14050H prepared bY BASF group: ADK STAB LA-62, ADK STAB LA-52, ADK STAB LA-67, and ADK STAB LA-57 prepared by ASAHI DENKA Co.,Ltd., and the like.

Example of Compound [B-2] include CHIMASSORB944FDL, CHIMASSORB2020FDL, CHIMASSORB119FL, and TINUVIN622LD prepared by Ciba-Geigy corporation.; CYASORB UV-3346 and CYASORB UV-3529 prepared by Cytec Industries Inc.; UVINUL5050H prepared by BASF group., and the like.

### [Phosphorus Stabilizer]

The thermoplastic resin of the present invention preferably contains a phosphorus stabilizer of 0.01 to 1 parts by mass relative to 100 parts by mass of Polymer [A-1] and Polymer [A-2] of the present invention, and with the use of the phosphorus stabilizer, the white turbidity occurring at the time of the irradiation of laser light to the thermoplastic of the present invention can be avoided.

The phosphorus stabilizer is not particularly limited, as long as it is generally used in the public resin industry, and examples include monophosphite compounds such as triphenyl phosphite, diphenylisodecyl phosphite, phenyldiisodecyl phosphite, tris(nonylphenyl)phosphite, tris(dinonylphenyl)phosphite, tris(2,4-di-t-butylphenyl)phosphite, tris(2-t-butyl-4-methylphenyl)phosphite, tris(cyclohexylphenyl)phoshite, 2,2-methylenebis(4,6-di-t-butylphenyl)octylphosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-disiloxy-9,10-dihydro-9-oxa-10-phosphaphenanthrene, and the like.

Other than diphosphite compounds such as 4,4'-buthylidene-bis(3-methyl-6-t-butylphenyl-di-tridecylphosphite), 4,4'-isopropylidene-bis(phenyl-di-alkyl(C12 to C15) phosphite), 4,4'-isopropylidene-bis(diphenylmonoalkyl(C12 to C15) phosphite), 1,1,3-tris(2-methyl-4-di-tridecylphosphite-5-t-butylphenyl)butane, tetrakis(2,4-di-t-buthylphenyl)-4,4'-biphenylenediphosphite,cyclic neopentanetetrayl bis(isodecylphosphite), cyclicneopentanetetraylbis(nonylphenylphosphite), cyclicneopentanetetraylbis(2,4-di-t-butylphenylphosphite), cyclicneopentanetetraylbis(2,4-dimethylphenylphosphite), cyclicneopentanetetraylbis(2,6-di-t-butylphenylphosphite), for the purpose of improving hydrolysis resistance, a phosphorus stabilizer of relatively-high molecular weight around which a group with high steric hindrance is provided, for example, tris[2-[[2,4,8,10-tetra-t-butyldibenzo[d,f][1,3,2]dioxaphosphefin-6-yl]oxy]ethyl]amine, and a compound having the structure of phosphate ester and phenol in a single molecule, for example, 6-[3-(3-t-butyl-4-hydroxy-5-methylphenyl)propoxy]-2,4,8,10-tetrakis-t-butylbenzo[d,f][1,3,2]dioxaphosphepine and 6-[3-(3,5-di-t-butyl-4-hydroxyphenyl)propoxy]-2,4,8,10-tetrakis-t-butylbenzo[d,f][1,3,2]dioxaphosphepine, are included.

Among these, 6-[3-(3-t-butyl-4-hydroxy-5-methylphenyl)propoxy]-2,4,8,10-tetrakis-t-butylbenzo[d,f][1,3,2]dioxaphosphepine, tris-(nonylpheyl)phosphite, tris[2-[[2,4,8,10-tetra-t-butyldibenzo[d,f][1,3,2]dioxaphosphephin-6-yl]oxy]ethyl]amine, tris(dinonylphenyl)phosphite, tris(2,4-di-t-butylphenyl)phosphite, and tris[2-[[2,4,8,10-tetra-t-butyldibenzo[d,f][1,3,2]dioxaphosphephin-6-yl]oxy]ethyl]amine, are particularly preferable.

### [Hydrophilic Stabilizer]

A technique that a hydrophilic stabilizer is added to the thermoplastic resin composition of the present invention is known for the purpose of improving the humidity and thermal resistance property of the resin and improving the demolding property at the time of molding. A preferred embodiment of the present invention is to contain 0.05 to 5 parts by weight of the hydrophilic stabilizer relative to 100 parts by weight of the polymer.
Examples of the hydrophilic stabilizer include a compound containing, for example, a polyvalent alcohol described in Japanese Unexamined Patent Publication No. H09-241484, a polyvalent alcohol, an ester of a polyvalent alcohol and a fatty acid, a compound having a hydrophilic group and a hydrophobic group described in Japanese Unexamined Patent Publication No. 2001-26718.

### (Polyvalent Alcohol)

As such polyvalent alcohol, ones having the molecular weight of 2,000 or less and the ratio of carbon atom number of 1.5 to 30, preferably 3 to 20, particularly preferably 6 to 20 relative to that of the number of a hydroxyl group in the same molecule, can be exemplified. Within the range of the ratio and the carbon atom number, the compatibility with the thermoplastic resin is excellent, and a bad effect on the transparency caused by forming foam at the time of melt-kneading is avoided. The range of the carbon atom number is preferably 6 to 100, and more preferably 6 to 60.
As the polyvalent alcohol, polyvalent alcohols in which at least one hydroxyl group in the molecule is bonded with a primary carbon atom, or in which the ratio of carbon atom number/hydroxyl group number is from 1.5 to 30, and in which the carbon atom number is 6 or more, are preferable.

Examples of the polyvalent alcohol include polyvalent containing an ether bond, a thioether bond, an alicyclic hydrocarbon group, or an aromatic hydrocarbon group in the molecule, but the aliphatic polyvalent alcohol is preferable. Additionally, the polyvalent alcohol containing an ester group is not included.
Specific examples of the polyvalent alcohol include 3,7,11,15-tetramethyl-1,2,3-trihydroxyhexadecane, dihydroxyoctane, trihydroxyoctane, tetrahydroxyoctane, dihydroxynonane, trihydroxynonane, tetrahydroxynonane, pentahydroxynonane, hexahydroxynonane, dihydroxytriacontane, trihydroxytriacontane, eicosahydroxytriacontane, and the like.
Among these, 3,7,11,15-tetramethyl-1,2,3-trihydroxyhexadecane is preferable.
Additionally, specific examples of the polyvalent alcohol also include 1,2-hexadecanediol, 2,3-heptadecanediol, 1,3-octadecanediol, 1,2-decyltetradecanediol, and the like.

### (Ester of Polyvalent alcohol and Fatty acid)

As the ester of the polyvalent alcohol and the fatty acid, for example, a sorbitol derivative and the like disclosed in Japanese Unexamined Patent Publication No. 2001-26682 are preferably used as they are excellent in transparency and provide a resin composition giving a less deterioration of transparency under the conditions of high temperature and high humidity atmosphere.
Besides, ones that the part of glycelin or pentaerythritol is esterified with aliphatic ester of the polyvalent alcohol disclosed in Japanese examined Patent Publication No. H07-007529 are also included as the preferable examples.

### (Sorbitol Derivative)

The sorbitol derivative used in the present invention is the compound represented by the following Formula (11) to (16).

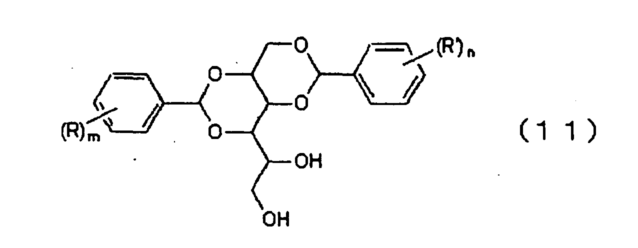

In Formula (11), each of R and R' may be same with or different from each other, and is any one of an alkyl group having 1 to 8 carbon atom(s), a halogen atom, and an alkoxy group having 1 to 4 carbon atom(s), and m and n are each independently an integer of 0 to 3.

Specific examples of the compound represented by above Formula (11) include 1,3,2,4-dibenzylidensorbitol, 1,3-benzyliden-2,4-p-methylbenzylidensorbitol, 1,3-benzyliden-2,4-p-ethylbenzylidensorbitol, 1,3-p-methylbenzyliden-2,4-benzylidensorbitol, 1,3-p-ethylbenzyliden-2,4-benzylidensorbitol, 1,3-p-methylbenzyliden-2,4-p-ethylbenzylidensorbitol, 1,3-p-ethylbenzyliden-2,4-p-methylbenzylidensorbitol, 1,3,2,4-di(p-methylbenzyliden)sorbitol, 1,3,2,4-di(p-ethylbenzyliden)sorbitol, 1,3,2,4-di(p-n-propylbenzyliden)sorbitol, 1,3,2,4-di(p-i-propylbenzyliden)sorbitol, 1,3,2,4-di(p-n-butylbenzyliden)sorbitol, 1,3,2,4-di(p-s-butylbenzyliden)sorbitol, 1,3,2,4-di(p-t-butylbenzyliden)sorbitol, 1,3,2,4-di(2',4'-dimethylbenzyliden)sorbitol, 1,3,2,4-di(p-methoxybenzyliden)sorbitol, 1,3,2,4-di(p-ethoxybenzyliden)sorbitol, 1,3-benzyliden-2,4-p-chlorbenzylidensorbitol, 1,3-p-chlorbenzyliden-2,4-benzylidensorbitol, 1,3-p-chlorbenzyliden-2,4-p-methylbenzylidensorbitol, 1,3-p-chlorbenzyliden-2,4-p-ethylbenzylidensorbitol, 1,3-p-methylbenzyliden-2,4-p-chlorbenzylidensorbitol, 1,3-p-ethylbenzyliden-2,4-p-chlorbenzylidensorbitol, and 1,3,2,4-di(p-chlorbenzyliden)sorbitol, and a mixture of more than two or more of these, and particularly include, preferably 1,3,2,4-dibenzylidensorbitol, 1,3,2,4-di(p-methylbenzyliden)sorbitol, 1,3,2,4-di(p-ethylbenzyliden)sorbitol, 1,3-p-chlorbenzyliden-2,4-p-methylbenzylidensorbitol, 1,3,2,4-di(p-chlorbenzyliden)sorbitol, and a mixture of two or more of these.
Among the sorbitol derivatives described above, a compound represented by the following Formula (12) is the preferable example.

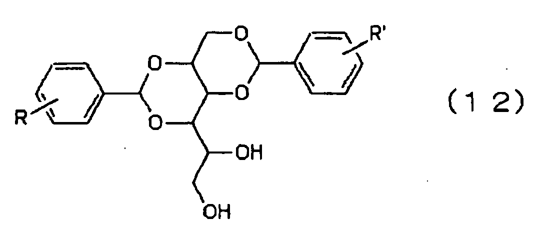

In Formula (12), R and R' may be same with or different from each other, and is a methyl group or an ethyl group.

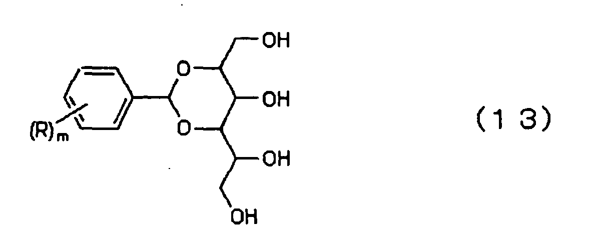

In Formula (13), each R may be same with or different from each other, and is any one of a alkyl group having 1 to 8 carbon atom(s), a halogen atom, and an alkoxy group having 1 to 4 carbon atom(s), and m is an integer of 0 to 3.

Specific examples of the compound represented by the above Formula (13) include 2,4-benzylidensorbitol, 2,4-p-n-propylbenzylidensorbitol, 2,4-p-i-propylbenzylidensorbitol, 2,4-p-n-butylbenzylidensorbitol, 2,4-p-s-butylbenzylidensorbitol, 2,4-p-t-butylbenzylidensorbitol, 2,4-(2',4'-dimethylbenzyliden)sorbitol, 2,4-p-methoxybenzylidensorbitol, 2,4-p-ethoxybenzylidensorbitol, 2,4-p-chlorbenzylidensorbitol, and a mixture of two or more of these.

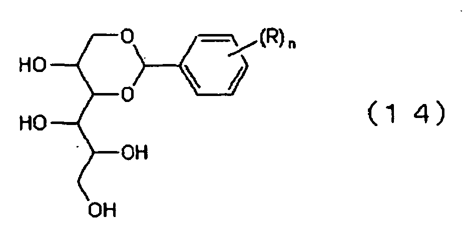

In Formula (14), each R may be same with or different from each other, and is any one of a alkyl group having 1 to 8 carbon atoms, a halogen atom, and an alkoxy group having 1 to 4 carbon atom(s), and n is an integer of 0 to 3.
Specific examples of the compound represented by the above Formula (14) include 1,3-dibenzylidensorbitol, 1,3-p-n-propylbenzylidensorbitol, 1,3-p-i-propylbenzylidensorbitol, 1,3-p-n-butylbenzylidensorbitol, 1,3-p-s-butylbenzylidensorbitol, 1,3-p-t-butylbenzylidensorbitol, 1,3-(2',4'-dimethylbenzyliden)sorbitol, 1,3-p-methoxybenzylidensorbitol, 1,3-p-ethoxybenzylidensorbitol, 1,3-p-chlorbenzylidensorbitol, and a mixture of two or more of these.

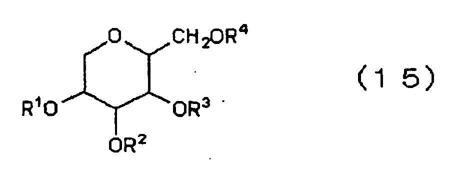

In Formula (15), R¹ to R⁴ each is a fatty acyl group having 10 to 30 carbon atoms or a hydrogen atom.
Specific examples of the compound represented by the above Formula (15) include 1,5-sorbitanmonostearate, 1,5-sorbitandistearate, 1,5-sorbitantristearate, 1,5-sorbitanmonolaurate, 1,5-sorbitandilaurate, 1,5-sorbitantrilaurate, 1,5-sorbitanmonopalmitate, 1,5-sorbitandipalmitate, 1,5-sorbitantripalmitate, and a mixture of two or more of these.

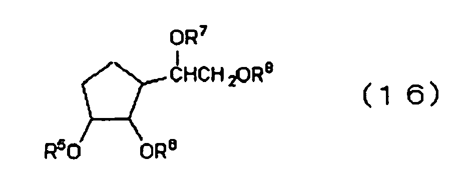

In Formula (16), R⁵ to R⁸ each is an aliphatic acyl group having 10 to 30 carbon atoms or a hydrogen atom.
Specific examples of the compound represented by Formula (16) include 1,4-sorbitanmonostearate, 1,4-sorbitandistearate, 1,4-sorbitantristearate, 1,4- sorbitanmonolaurate, 1,4-sorbitandilaurate, 1,4- sorbitantrilaurate, 1,4-sorbitanmonopalmitate, 1,4-sorbitandipalmitate, and 1,4-sorbitantripalmitate, and a mixture of two or more of these.

Among above sorbitol-based derivatives, benzylidenesorbitol derivatives represented by above Formulas (11) to (14) are preferable and dibenzylidenesorbitol derivative represented by above Formula (11) is more preferable. The sorbitol-based derivatives represented by Formulas (11) to (16) may be used in single or in combination with each other.
In order to improve dispersibility of the sorbitol-based derivatives mentioned above, the derivatives may be mixed with aliphatic acids. An example of the aliphatic acids includes an aliphatic acid having 10 to 30 carbon atoms.

### (Other esters)

For the polyalcohol aliphatic acid esters having a 3 or more valence, ones in which a part of the alcoholic hydroxyl group is esterified can be used. A part of the specific examples of the polyalcohol aliphatic acid esters which can be used include glycerin aliphatic acid esters such as glyceryl monostearate, glyceryl monolaurate, glyceryl monomiristate, glyceryl monopalmitate, glyceryl distearate, and glycerin dilaurate; and pentaerythritol aliphatic acid esters such as pentaerythritol monostearate, pentaerythritol monolaurate, pentaerythritol distearate, and pentaerythritol dilaurate, pentaerythritol tristearate.

### (Hydrophilic stabilizer-Compound having hydrophilic group and hydrophobic group)

Examples of the compounds having hydrophilic group and hydrophobic group include an amine compound or amide compound in which the hydrophilic group in the compound is a hydroxyl alkyl group and the hydrophobic group is an alkyl group having 6 or more carbon atoms.

Specifically, examples include myristyl diethanolamine, 2-hydroxyethyl-2-hydroxydodecylamine,2-hydroxyethyl-2-hydroxytridecylamine,2-hydroxyethyl-2-hydroxytetradecylamine, pentaerythritol monostearate, pentaerythritol distearate, pentaerythritol tristearate, di-2-hydroxyethyl-2-hydroxydodecylamine, alkyl (carbon atoms 8 to 18) benzyldimethylammonium chloride, ethylenebisalkyl (carbon atoms 8 to 18) amide, stearyl diethanolamide, lauryl diethanolamide, myristyl diethanolamide, and palmityl diethanolamide. Among these, the amine compound or the amide compound having a hydroxy alkyl group is preferably used.
These hydrophilic stabilizers are included in the thermoplastic resin of the preset invention in an amount of 0.0001 to 10 parts by mass, preferably 0.05 to 5 parts by mass, more preferably 0.1 to 3 parts by mass, relative to 100 parts by mass of Compound [A-1] and Compound [A-2] in the preset invention.

### [Other Arbitrary Components]

In the thermoplastic resin composition of the present invention, in addition to the components mentioned above, arbitrary components such as a known weathering stabilizer, heat-resistant stabilizer, antistatic agent, fire retardant, slip agent, antiblocking agent, antifog agent, lubricant, natural oil, synthesized oil, wax, and organic or inorganic filler or the like may be blended within the scope of not disturbing the preferred properties of the optical component of the present invention.
For example, as for the weathering stabilizer blended as arbitrary components, ultraviolet absorbers such as a benzophenone-based compound, a benzotriazole-based compound, a nickel-based compound, and a hindered amine-based compound not described above are given.

Specific examples of the benzotriazole-based ultraviolet absorbers include 2-(5-methyl-2-hydroxyphenyl)benzotriazole, 2,2-hydroxy-3,5-bis(α,α-dimethylbenzyl)phenyl, 2-(2'-hydroxy-5'-methyl-phenyl)benzotriazole, 2-(2'-hydroxy-3',5'-di-t-butylphenyl)benzotriazole, 2-(2'-hydroxy-3'-t-butyl-5'-methyl-phenyl)-5-chlorobenzotriazole, 2-(2'-hydroxy-3',5'-di-t-butyl-phenyl)-5-chlorobenzotriazole, 2-(2'-hydroxy-4'-n-octoxyphenyl)benzotriazole; benzotriazole derivatives such as Tinuvin 328 and Tinuvin PS (both manufactured by Chiba-Geigy Co., Ltd.), and SEESORB709(2-2'-hydroxy-5'-t-octylphenyl)benzotriazole, Shiraishi Calcium Kaisha, LTD.) which are commercially available.
Specific examples of benzophenone-based ultraviolet absorbers include 2,4-dihydroxybenzophenone, 2-hydroxy-4-methoxybenzophenone, 2,2'-dihydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-methoxy-2'-carboxybenzophenone, 2-hydroxy-4-methoxy-5-sulfobenzophenone trihydrate, 2-hydroxy-4-n-octoxy benzophenone, 2-hydroxy-4-octadecyloxy benzophenone, 2-hydroxy-4-n-dodecyloxy benzophenone, 2-hydroxy-4-benzyloxybenzophenone, 2,2',4,4'-tetrahydroxy benzophenone, 2-hydroxy-4-dodecyloxy benzophenone, 2-hydroxy-4-(2-hydroxy-3-methacryloxy)propoxy benzophenone, Uvinul 490 (a mixture of 2,2'-dihydroxy-4,4'-dimethoxy benzophenone and other tetra-substituted benzophenone, manufactured by GAF Corporation), and PermylB-100 (benzophenone compound, manufactured by Ferro Corporation).

As for the heat-resistant stabilizer blended as an arbitrary component, phenolic antioxidants such as tetrakis[methylene-3-(3,5-di-t-butyl-4-hydroxyphenyl)propionate]methane, β-(3,5-di-t-butyl-4-hydroxyphenyl)alkyl propionate ester, and 2,2'-oxamidebis[ethyl-3-(3,5-di-t-butyl-4-hydroxyphenyl)propionate], fatty acid metal salts such as zinc stearate, calcium stearate, and calcium 1,2-hydroxystearate, and polyalcohol fatty acid esters such as glycerin monostearate, glycerin distearate, pentaerythritol monostearate, pentaerythritol distearate, and pentaerythritol tristearate are exemplified. Further, phosphorus stabilizers such as distearyl pentaerythritol diphosphate, phenyl-4,4'-isopropylidene diphenol-pentaerythritol diphosphate, bis(2,6-di-t-butyl-4-methylpehnyl)pentaerythritol diphosphate, and tris(2,4-di-t-butylphenyl)phosphate, may be used. These stabilizers may be blended alone or in combination. For example, bending of tetrakis[methylene-3-(3,5-di-t-butyl-4-hydroxyphenyl)propionate]methane, and zinc and glycerin monostearate may be exemplified. Theses stabilizers may be used by blending one kind or two or more kinds.

In the present invention, particularly, the phenolic antioxidants are preferably used within the scope of not disturbing the effects of the hindered amine-based light stabilizers.
A blending method of the cyclic olefin polymer and other resin components or additives used in the present invention is not limited and a known method can be employed. For example, the method includes simultaneously blending each component.

### [Thermoplastic resin composition of the present invention

The thermoplastic resin composition of the present invention includes Polymer [A-1] represented by Formula (1), and Compound

### [B-1] and Compound [B-2].

In addition, the thermoplastic resin composition of the present invention includes Polymer [A-2] having an alicyclic structure on at least one moiety of repeated structural units, Compound [B-1], and Compound [B-2] mentioned below.
The amount of Compound [B-1] and Compound [B-2] included in the thermoplastic resin composition of the present invention is from 0.3 to 5 parts by mass, preferably 0.5 to 4 parts by mass, and more preferably 1 to 3 parts by mass relative to 100 parts by mass of Polymers [A-1] or [A-2], and the mass ratio [B-1]/[B-2] is 1/10 to 10/1, preferably 1/5 to 5/1.

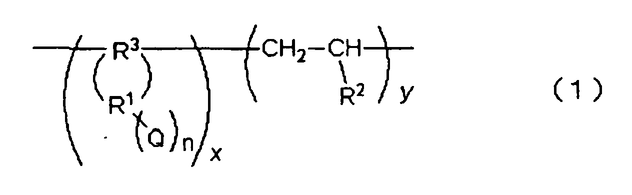

In Formula (1), x and y each represents a copolymerization ratio and is a real number satisfying 0/100 ≤ y/x ≤ 95/5; n represents a number of a substituent Q and is an integer satisfying 0 ≤ n ≤ 2; R¹ is a 2 + n valent group of at least one or more kind(s) selected from hydrocarbon groups having 2 to 20 carbon atoms; R² is a hydrogen atom or a monovalent group of at least one or more kind(s) selected from hydrocarbon groups having 1 to 10 carbon atom(s); R³ is a divalent group of at least one or more kind(s) selected from hydrocarbon groups having 2 to 10 carbon atom(s); Q is a divalent group of at least one or more kind(s) selected from structures represented by COOR⁰; and R⁰ is a hydrogen atom or a monovalent group of at least one or more kind(s) selected from hydrocarbon groups having 1 to 10 carbon atom(s).
Compound [B-1] is a hindered amine-based light stabilizer having the molecular weight of 400 or more and less than 1000, and Compound [B-2] is a hindered amine-based light stabilizer having the molecular weight of 1000 or more and 5000 or less.

A method of producing the thermoplastic resin composition of the present invention is not particularly limited and a known method can be used. Specifically, the thermoplastic resin composition of the present invention is produced in a pellet shape by adding the components mentioned above which are Polymer [A-1] or Polymer [A-2], and Compound [B-1] and Compound [B-2] as the hindered amine-based light stabilizer, adding phosphorus stabilizers and hydrophilic stabilizer according to the objects, further adding other arbitrary components within a scope of not disturbing the objects of the invention, and then flash drying the components or blending the components with a use of Henschel mixer, ribbon blender, melt blender, and homomixer or the like and then pelletizing the components by using the extruder. Moreover, depending on the shape of molding material to be molded, a molded product can be obtained by injection molding method, extrusion molding method, blow molding method, vacuum molding method, and slash molding method.

In case of using the thermoplastic resin composition of the present invention for optical applications, it is necessary to transmit light beam. Therefore, it is preferable to have light transmittance in a preferred range. The light transmittance is defined by a total light transmittance or a spectral light transmittance according to the applications.
In case of using the thermoplastic resin composition in total light or a plurality of wavelength region, it is necessary to have good total light transmittance and the total light transmittance in a state where an antireflection coating is not provided on the surface is 85% or more, preferably 88 to 93%. When the total light transmittance is 85% or more, the required amount of light can be obtained, thus it is preferable. A measuring method of the total light transmittance may use a known method and the measuring apparatuses are not limited. For example, on the basis of ASTM D1003, a method is exemplified by a method in which total light transmittance is obtained by molding the thermoplastic resin in such a way that a sheet having a thickness of 3mm and measuring the molded sheet using a haze meter.

In case of an optical system (for example, laser optical system) using only a specific wavelength, even when the total light transmittance is not relatively high, it can be still used as long as the spectral light transmittance in the wavelength is in a preferred range. In this case, the spectrum light transmittance in the using light wavelength in a state where the antireflection coating is not provided on the surface is preferably 85% or more, more preferably 88 to 93%. When the spectral light transmittance is 85% or more, the required amount of light can be obtained, thus it is preferable. As a measuring method and a measuring device, a known method and device can be used. Specifically, a spectral photometer may be exemplified as the measuring device.

Further, the thermoplastic resin composition of the present invention has excellent light tranmittance at a wavelength of 390 to 420nm, particularly of 400 to 420nm, for example of laser light and the spectral light transmittance of 85% or more at a wavelength of 400 nm, and the spectral light transmittance is preferably 86 to 93%. In addition, the thermoplastic resin composition of the present invention hardly generates deterioration. Therefore, the optical property hardly changes when used as an optical element. Further, since there is an effect for preventing foreign substances on the surface of the molded material obtained by molding the resin composition, it is possible to be used suitably in the optical elements.
In case of using in the optical components, a known antireflection coating is provided so as to further improve the light transmittance.

### [Optical Element]

The optical element is a component used in an optical system, and specific examples of the optical element as a optical lens or optical prism include imaging lenses for camera; lenses such as microscope, endoscope, and telescope lens; total light transmission type lenses such as lenses of glasses; pick up lenses of Optical Disk such as CD, CD-ROM, WORM (write once, read many optical disk), MO (the Laser Disk that is rewritable; optical magnetic disc), MD (mini-disc), and DVD (digital video disk); lenses for scanning laser such as fθ lenses of laser beam printer, lenses for sensors; prism lenses for finder of camera. As for applications of laser disc, CD, CD-ROM, WORM (write once, read many optical disk), MO (the Laser Disk that is rewritable; optical magnetic disc), MD (mini-disc), and DVD (digital video disk) are exemplified. As other optical applications, light guide plate for liquid crystal display; optical film such as polarizing film, phase difference film, and light diffusion film; light diffusion plate; optical card; and liquid crystal display element substrate are exemplified.
The thermoplastic resin composition of the present invention may be molded in a various form of spherical shape, rod-like shape, plate-like shape, column shape, cylindrical shape, tubular shape, fibrous shape, film shape, or sheet shape, and may be used in the various forms above.

The method of molding for obtaining an optical element is not particularly limited and a known method can be used. For the applications and shapes, although it is different in accordance with the applications and shapes, injection molding method, extrusion molding method, blow molding method, vacuum molding method, and slash molding method can be employed. However, from the viewpoints of moldability and productivity, the injection molding method is preferred. The molding condition is approximately selected according to a purpose of uses or the molding method, but the temperature of the resin in the injection molding method is generally selected from the range of 150 to 400°C, preferably 200 to 350°C, more preferably 230 to 330°C. Since the thermoplastic resin composition of the present invention is excellent in low birefringence, transparency, mechanical strength, thermal resistance, and low absorption, it is possible to be used in various applications, and particularly it is possible to be used suitably in the optical element used in the optical pickup device.

### [Optical path difference providing structure]

An optical path difference providing structure is a structure having a function of providing a predetermined optical path difference to a predetermined light on at least one optical surface of the optical elements through which the light passes.
Hereinafter, it will be described in detail in Fig. 1 which relates to the pickup device.
The thermoplastic resin composition of the present invention is disposed in a common optical path of a first light source, a second light source, and a third light source and used in an objective optical element OBL having a diffraction structure. Further, in the objective optical element, a saw-like diffraction structure is provided.

This structure is provided in which fine steps are provided in a concentric pattern about the optical axis, and the light beam passing through neighboring orbicular zones are given by the predetermined optical path difference.
By setting a pitch (diffraction power) or a depth (brazed wavelength) of the saw structure, as for the 'optical disc of high density', the light beam from the first light source forms a light-collected spot by the second diffraction light, and as for the DVD, the light beam from the second light source forms a light-collected spot by a first diffraction light.
By using the light having a different diffraction order, an efficiency of diffraction in each case is improved so that the amount of light is secured.

As for the CD, it is preferable that the light beam from the third light source is set to a diffracted light having the order same to that of the DVD, but also may be set to the other suitable order. In this example, the first diffracted light is allowed as in the DVD to form a light-collected spot.
Such diffraction structure is one example of the optical path providing structure, and other known structures of 'phase difference providing structure' or 'multi level structure' may also be employed.
Herein, the optical path difference providing structure is employed so as to correct a spherical aberration caused by the difference in thickness of the light disc format, but it also can be used for correcting the aberration caused by the wavelength difference of the using wavelength or the variation in the using wavelength (mode hop). The former is the correction for a spherical chromatic aberration caused by the wavelength difference of 50 nanometer or more, and the latter is the correction for a small wavelength variation changing within 5 nm.

In this example, an example in which the diffraction structure is provided on the objective optical element is described, but it is also possible to be provided on the other elements such as a collimator or coupling lenses.
It is most preferable to use such material in the optical element having a refracting surface and an aspherical surface.
By using the thermoplastic resin composition of the present invention, prolonged use which is realized only in a glass in the past is now realized, and the optical path difference providing structure which is impossible in a glass lens can be readily realized.

### [Optical pickup device]

An optical pickup device is a device having a function of playing back and/or recording information on an optical information recording medium, and which includes a light source for emitting light, and an optical element for irradiating light collecting to the optical information recording medium and/or light reflected from the optical information recording medium. Specifications of the device are not limited. However, in order to describe effects of the present invention, an example of an optical element used for the optical pickup device which can be obtained from the thermoplastic resin composition of the present invention will be described with reference to Fig. 1.

In Fig. 1, the target is the optical pickup device using the light source having the using wavelength of 405 nm, so-called blue-violet laser, which is 3-format compatible of 'optical disc of high density', DVD, and CD. The 'optical disc of high density' having the protective substrate thickness t1 of 0.6 mm is supposed as a first optical information medium, the DVD having the protective substrate thickness t2 of 0.6 mm is supposed as a second optical information recording medium, and the CD having the protective substrate thickness t3 of 1.2 mm is supposed as a third optical information recording medium. Each of D1, D2, and D2 represents the thickness of the substrate.

Fig. 1 is a schematic view showing an optical pickup device related to the present invention.
A laser diode LD1 is the first light source, and the blue-violet laser having a wavelength λ1 of 405nm is used but the laser having a wavelength in the range of 390 to 420 nm can be appropriately employed. LD2 is a second light source, and the red laser having a wavelength λ2 of 655nm is used but the laser having a wavelength in the range of 630 to 680 nm can be appropriately employed. LD3 is a third light source, and the infrared laser having a wavelength λ3 of 780nm is used but the infrared laser having a wavelength in the range of 750 to 800 nm can be appropriately employed.

The laser diode LD2 is so-called light source unit of two-laser in one-package in which two light emitting points of the second light source (light source for DVD) and the third light source (light source for CD) are packed in a same package.
In this package, since the second light source is adjusted to be disposed on an optical axis, the third light source is disposed slightly away from the optical axis thereby resulting difference in an image height. Accordingly, techniques for improving this characteristic are already known so that such techniques can be employed if necessary. In the invention, a correcting plate DP is used to perform the correction. In the correcting plate DP, a grating is formed so that the displacement of the optical axes is corrected.
The solid line from LD2 is the light beam of light source for DVD, and the dashed line is the light beam of light source for CD.

A beam splitter BS1 transmits or reflects the light beam of the light source entered from LD1 and LD2 in a direction towards the OBL of objective optical element.
In order to improve a beam quality, the light beam transmitted from the LD1 is entered to a beam shaper BSL, sent to the BS1 mentioned above, and then incident to the collimator CL thereby being collimated to infinite parallel light. After, the light beam is sent to the beam expander BE constituted by the beam splitter BS3 and concave and convex lenses, and then entered to the object lens OBL which is the objective optical element. Next, the light beam forms the light-collected spot on the information recording surface via a protective substrate of the first optical information recording medium. Further, the light beam is reflected on the information recording surface, passed the collimator CL via same path as above, a proceeding direction is converted by the beam splitter BS3, and then the light beam is collected to a sensor S1 via a sensor lens SL1. The light beam is subjected to a photoelectric conversion by the sensor thereby being converted into an electronic signal.
In addition, in-between the beam expander BE and objective lens OBL, a λ/4 (quarter the wavelength) plate not shown is disposed, such that gives a just half the wavelength change between the forwarding and returning process thus changing the polarization direction. Therefore, the proceeding direction of the light beam in the returning direction is changed by the BS3.

The beam shaper BSL has curvatures differing respectively for two directions of a direction perpendicular to the optical axis and a direction perpendicular to such direction (having a curvature of rotation asymmetric for the optical axis).
Each of the light beam emitted from the light source, under the semiconductor light source configuration, has a different divergence angle to two directions of a direction perpendicular to the optical axis and a direction perpendicular to such direction, and forms an elliptical shape as viewed in the optical axis direction, but it is not preferable for the light beam of the light source for the optical disc. Therefore, the light beam is subjected to different refractions in each direction by the beam shaper BSL so that the light beam emitted has an approximately circular cross section.
In the invention, the beam shaper BSL is disposed in the optical path of LD1, but it can also be disposed in the optical path of LD2.
In the same manner as in LD1, the light beam transmitted from the LD2 forms a light-collected spot on an optical disc (a second optical information recording medium and a third optical information recording medium), reflects and then is finally collected in the sensor S2. Except that an agreement in the optical paths is made by the BS1, there is no change as compared to LD1.
The objective optical element OBL is a single lens in this figure, but it may be formed of a plurality of optical elements if necessary.
Since the resin composition of the present invention has low birefringence index , it is obvious that the resin composition can be perfectly used in the device having such configuration.

### [Actuator]

In Fig. 1 relating the optical pickup device, a state where the light beam transmitted from each LDs is collected on the information recording face via a protective substrate of the optical disc is described, but a basic position is replaced by an actuator according to the optical disc for playing back/recording, and the focus slide (focusing) is performed from the reference position.
According to the thicknesses of a protective substrate and the size of a pit in each optical information recording medium, a numerical apertures required for the objective optical element OBL is changed. Here, the numerical apertures for CD is 0.45, and the numerical apertures for DVD and 'optical disc of high density' is 0.65, but those may be appropriately selected from the range of 0.43 to 0.5 as for the CD and from the range of 0.58 to 0.68 as for the DVD.
IR is a diaphragm to cut unnecessary light.
The parallel light is incident on the objective lens OBL, but a configuration in which a collimation is not provided and a limited divergent light is incident may be employed.
By using the thermoplastic resin composition of the present invention, a long period of use realized only by a conventional method can be realized, and it is obvious that a torque required for an operation by the actuator or the like is significantly decreased as compared to the glass lens.

### [Examples]

Hereinafter, the present invention will be described further with reference to the following examples, but the invention is not limited to those examples. In Examples and Comparative Examples, a measurement for each property and condition, and a measuring method of physical property were carried out by following methods.

### [Melt flow rate (MFR)]

A melt flow rate was measured at 260°C under a load of 2.16 Kg, in accordance with ASTM D1238.

### [Softening temperature (TMA)]

The softening temperature was measured by observing the heat deformation behavior of a sheet having the 1 mm thickness with the use of Thermo Mechanical Analyzer manufactured by DuPont. A quartz needle was placed on the sheet and applied with a load of 49 g, next the sheet was heated at a rate of 5 °C/min. The temperature at which the sheet was penetrated with the needle by the depth of 0.635 mm was assumed as TMA.

### [Glass transition temperature (Tg)]

A sample was heated up to 250°C in nitrogen and under the temperature increasing rate of 10 °C/min, and then the sample was cooled rapidly. Thereafter, the sample was measured at the temperature increasing rate of 10 °C/min, with the use of DSC-20 manufactured by Seiko Denshi Kogyo K.K.

### [Haze]

The haze was measured by molding a flat board having a thickness of 3 mm by an injection molding under nitrogen gas stream by using an injection molding machine (IS-50 manufactured by Toshiba Machine Co., Ltd.) which is set to a cylinder temperature of 260°C and a mold temperature of 125 °C in accordance with ASTM-D1003.

### [Spectral light transmittance (T400) in wavelength of 400 nm]

A rectangular board having a thickness of 3 mm was molded by an injection molding and the light transmittance at a wavelength of 400 nm was measured by using a spectrophotometer for light transmittance.

### [Appearance evaluation after laser radiation]

With the use of a laser having a rating of 30 mW and 405 nm (NDHV310ACA manufactured by Nichia Kagaku Co., Ltd.), a beam shape was adjusted by a collimator lens to a parallel light forming an ellipse which has a cross section of minor axis 1.5 mm and longer axis 3.0 mm, each optical system for irradiating perpendicularly to a flat board having a thickness of 3 mm obtained by the injection molding was set, and the irradiation was carried out at 23°C for 500 hours under a normal pressure. During the irradiation, the appearance in a circle having a diameter of 3 mm was evaluated around the center of the irradiation portion until 2000 hours for every 500 hours.

### [Environment test (Δ Haze)]

After the haze measurement mentioned above was performed, the rectangular board was left over under the temperature of 80°C and relative humidity of 90% for 48 hours. The haze was measured again, and then increment after the test as compared to the haze before the test was considered as Δ haze.

### [Blue-violet laser reliability evaluation]

By using a test piece having an optical surface of 45mmΦ X 3mm (thickness) which is injection molded by the injection molding machine (IS-50 manufactured by Toshiba Machine Co., Ltd.) which is set to the cylinder temperature of 260 °C and the mold temperature of 125°C, the blue-violet laser light of 405±10 nm and 200 mW/cm² was radiated to the center of the test piece positioned in a constant-temperature bath of 60 °C for 1000 hours by using a laser diode (TC4030S-F405ASU manufactured by Neo Arc Co., Ltd.). Before the irradiation and every 250 hours during the irradiation, wavefront RMS values of the 3 mm square portion in the center of the test piece were measured and temporal changes were evaluated. For the RMS value measurement, a laser interferometer (PTI 250RS manufacture by ZYGO Corporation(linearly-polarization specifications) was used. The irradiation portion in the test portion was observed by a stereomicroscope, and white turbidity and adhesion of foreign matters were confirmed. The results were represented by following symbols.
○: no change in RMS value
Δ: The change ratio of RMS value was observed less than 0.01 λ
X: RMS value is changing 0.01 λ or more. Or, the measurement became impossible.
∇: White turbidity was readily observed.
□: Adhesion of foreign matters was found.

### [Ash attachment test (ash test)]

A test piece having a thickness of 45 mmΦ and 3 mm was molded by injection molding under nitrogen gas stream by the injection molding machine (IS-50 manufactured by Toshiba Machine Co., Ltd.) which is set to the cylinder temperature of 260°C and the mold temperature of 125 °C and left under the condition of temperature 23°C and 50 %RH for 24 hours or more. After the spectral light transmittance of 405nm of the test piece was measured, the test piece was strongly rubbed with a cotton cloth back and forth for 20 times, and then was quickly moved position of 20mm above ashes of cigarette which was dried for 2 hours at the temperature of 60 °C, and the amount of attached ashes were visually observed. Next, the spectral light transmittance of 405 nm was measured with the ashes attached, and changes in spectral light transmittance of 405 nm (ΔT₄₀₅) from before the ash attachment test was calculated.

### (Polymer synthesis)

A copolymer of ethylenetetracyclo[4.4.0.12,5.17,10]-3-dodecen was obtained by copolymerizing with Ziegler catalyst. The physical properties are shown in Table 1.

**[Table 1]**

| | MFR | TMA | Tg |
|---|---|---|---|
| | g/10 min | °C | °C |
| Synthesis Example 1 | 2 | 167 | 155 |
| Synthesis Example 2 | 36 | 147 | 137 |
| Synthesis Example 3 | 15 | 135 | 124 |

| | | | |
|---|---|---|---|
| (Hindered amine light stabilizer) | | | |

As the hindered amine light stabilizer, following compounds were used.
[B-1]: Bis(2,2',6,6'-tetramethyl-4-piperidyl)sebacate having a molecular weight of 481, manufactured by Chiba-Geigy Co., Ltd., trade name TINUVIN 770.
[B-2]: Poly[6-(1,1,3,3-tetramethylbutyl)amino-1,3,5-triazine-2,4-diyl][(2,2,6,6-tetramethyl-4-piperidyl)-imino]hexamethylene[(2,2,6,6-tetramethyl-4-piperidyl)imino] having a molecular weight of 2000 to 3100, manufactured by Chiba-Geigy Co., Ltd., trade name CHIMASSORB 944.

### [Examples 1 and 2, and Comparative Examples 1 to 6]

To polymers in Synthetic Examples 1 to 3, Compound [B-1], Compound [B-2], and a phenolic stabilizer of tetrakis[methylene3-(3,5-di-t-butyl-4-hydroxyphenyl)propionate)methane] as Compound [C] was added in a ratio represented in table 2, and melt blended using a single screw-extruder of 30 mmΦ under a nitrogen gas stream to prevent oxidation of the polymers so that the melt blended material was pelletized.
Next, the obtained pellet was dried for 16 hours at 120 °C under nitrogen, the material was used as a raw material to mold a rectangular board having a thickness of 3 mm by the injection molding under nitrogen gas stream, and the physical property was evaluated. The results are shown in Table 2.

**[Table 2]**

| | Polymer | Compound | | Optical property | | Appearance evaluation by laser irradiation | |
|---|---|---|---|---|---|---|---|
| | | Kind | Blending quantity | HAZE | T400 | 500 hours irradiation | 2000 hours irradiation |
| | | | Part by mass | % | % | | |
| Example 1 | Synthesis Example 2 | [B-1] | 2.5 | 0.7 | 87 | Excellent | None White turbidity |
| | | [B-2] | 1 | | | | |
| Example 2 | Synthesis Example 2 | [B-1] | 1 | 0.5 | 86 | Excellent | None White turbidity |
| | | [B-2] | 1.5 | | | | |
| Comparative Example 1 | Synthesis Example 1 | [B-1] | 1.5 | 0.5 | 81 | Excellent | Slightly white turbidity |
| Comparative Example 2 | Synthesis Example 2 | [B-1] | 1 | 0.4 | 86 | Excellent | Slightly white turbidity |
| Comparative Example 3 | Synthesis Example 3 | [B-2] | 0.5 | 0.4 | 88 | Excellent | Slightly white turbidity |
| Comparative Example 4 | Synthesis Example 3 | [B-1] | 0.2 | 0.5 | 78 | Excellent | White turbidity |
| Comparative Example 5 | Synthesis Example 3 | [B-1] | 6 | 2.2 | 81 | Excellent | ---- |
| Comparative Example 6 | Synthesis Example 3 | [C] | 0.5 | 0.9 | 88 | Excellent | White turbidity |

In the appearance evaluation by the laser radiation, no changes were found before and after the 2000 hours of irradiation in Examples 1 and 2, but the white turbidity was slightly generated in Comparative Examples 1 to 3 and white turbidities were found in Comparative Example 4 and Comparative Example 6.

### [Examples 3 to 9 and Comparative Examples 7 to 9]

For the polymer obtained in Synthesis Example 2, Compound [B-1], Compound [B-2], the following phosphorus stabilizer, and the hydrophilic stabilizer were added in a ration represented in Table 3, and melt blended using a twin screw-extruder of 44 mmΦ under nitrogen gas stream so that the melt blended material was pelletized.
Then, by the injection molding machine (IS-50 manufactured by Toshiba Machine Co., Ltd.) which is set to the cylinder temperature of 260°C and the mold temperature of 125°C, the rectangular board having a thickness of 3 mm was formed by the injection molding under nitrogen gas stream, and Δ haze in the environment test was measured.
In order to evaluate the blue-violet laser reliability, a test piece having an optical surface of 45 mmΦ X 3mm (thickness) was formed and the blue-violet laser light of 405 ± 10 nm and 200 mW/cm² was radiated for 1000 hours to the center of the test piece positioned in the constant-temperature bath of 60°C by using the laser diode (TC4030S-F405ASU manufactured by Neo Arc Co., Ltd.). Before the radiation and every 250 hours during the radiation, wavefront RMS values of the 3mm square portion in the center of the test piece were measured and temporal changes were evaluated.
The results are shown in Table 3.

### (Phosphorus Stabilizer)

Phosphorus stabilizer-1: Tris[2-[[2,4,8,10-tetra-t-butyldibenzo[d, f][1, 3, 2] dioxaphosphepin-6-yl]oxy]ethyl]amine.
Phosphorus stabilizer-2: 6-[3-(3-t-butyl-4-hydroxy-5-methylphenyl)propoxy]-2,4,8,10-tetrakis-t-butyldibenzo[d,f][1.3.2] dioxaphosphepin.

### (Hydrophilic Stabilizer)

Hydrophilic stabilizer-1: 3,7,11,15-tetramethyl-1,2,3-trihydroxyhexadecane.
Hydrophilic stabilizer-2: a mixture of 1,5-sorbitanmonostearate and 1,4-sorbitanmonostearate.

**[Table 3]**

| | | E. 3 | E. 4 | E. 5 | E. 6 | E. 7 | E. 8 | E. 9 | C.E. 7 | C.E. 8 | C.E. 9 |
|---|---|---|---|---|---|---|---|---|---|---|---|
| Compound[B-1] | | 0.2 | 1 | 1.6 | 1 | 1 | 1 | 1 | 0.1 | 1.9 | 0 |
| Compound[B-2] | | 1.8 | 1 | 0.4 | 1 | 1 | 1 | 1 | 1.9 | 0.1 | 2 |
| Phosphorus stabilizer-1 | | 0 | 0 | 0 | 0.3 | 0 | 0.3 | 0.3 | 0 | 0 | 0.3 |
| Phosphorus stabilizer-2 | | 0 | 0 | 0 | 0 | 0.3 | 0 | 0 | 0 | 0 | 0 |
| Hydrophilic stabilizer-1 | | 0 | 0 | 0 | 0 | 0 | 2 | 0 | 0 | 0 | 2 |
| Hydrophilic stabilizer-2 | | 0 | 0 | 0 | 0 | 0 | 0 | 2 | 0 | 0 | 0 |
| Haze | | 0.4 | 0.5 | 0.4 | 0.6 | 0.6 | 0.5 | 0.5 | 0.4 | 0.7 | 0.5 |
| Environmental test(Δ Haze) | | 3 | 2.4 | 3.2 | 2.7 | 2.8 | 0.1 | 0 | 2.5 | 3.8 | 0 |
| Blue-violet laser reliabi -lity test | After 250 hour | ○ | ○ | ○ | ○ | ○ | ○ | ○ | ○ | ○ | ○ |
| | After 500 hour | ○ | ○ | ○ | ○ | ○ | ○ | ○ | ○ □ | ○∇ | ○ □ |
| | After 750 hour | ○ | ○ | ○ | ○ | ○ | ○ | ○ | ○ □ | Δ∇ | ○ □ |
| | After 1000 hour | ○ | ○ ∇ | ○ ∇ | ○ | ○ | ○ | ○ | Δ □ | × ∇ | Δ □ |

| | | | | | | | | | | | |
|---|---|---|---|---|---|---|---|---|---|---|---|
| E. : Example C.E.: Comparative Example | | | | | | | | | | | |

For Examples 4 and 5, and Comparative Examples 7 and 9, the ash attachment test (ash test) was performed. The results are shown in Table 4.

**[Table 4]**

| | | Example 4 | Example 5 | Comparative Example 7 | | Comparative Example. 9 |
|---|---|---|---|---|---|---|
| Visual observation | --- | None | Slight attached ashes | Large amounts of attached ashes | | Large amounts of attached ashes |
| ΔT₄₀₅ | % | 0 | -0.2 | -3.5 | | -8.2 |

From the above results, it is understood that the various defects in the laser irradiance can be improved by using the thermoplastic resin composition of the present invention. It is also clear that the white turbidity at the time of irradiation can be reduced by the thermoplastic resin composition using the phosphorus stabilizer which is exemplified as the preferred embodiment. In addition, it is understood that the improvement on an environmental reliability can be made without causing any defects at the time of laser irradiation by the thermoplastic resin composition using the hydrophilic stabilizer which is exemplified as the preferred embodiment. Further, the amount of a foreign substance deposited on a surface of the optical element can be reduced by using the thermoplastic resin composition of the present invention, and thus the transmittance of rays cannot be interrupted.

The thermoplastic resin composition of the present invention has excellent optical properties, hardly generates the deterioration when a laser light of the region nearby UV is used, possesses the optical properties changing in the extremely small extent during the use, and it is capable of maintaining a high ray transmittance and can be suitably used as an optical element.
Further, since a foreign substance hardly deposits on a surface of the optical element obtained by molding the thermoplastic resin composition of the present invention, the transmission of light is not interrupted and can be suitably used for an optical pickup device or the like.

## Claims

1. A thermoplastic resin composition comprising Polymer [A-1] represented by Formula (1), Compound [B-1], and Compound [B-2], wherein the total amount of Compound [B-1] and Compound [B-2] included is from 0.3 to 5 parts by mass relative to 100 parts by mass of Polymer [A-1], and the mass ratio [B-1]/[B-2] is from 1/10 to 10/1: 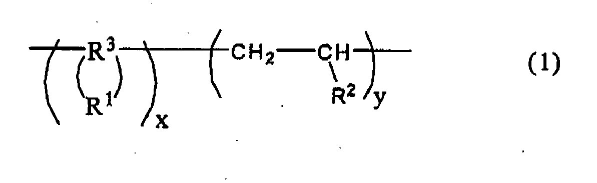 where, x and y each represents a copolymerization ratio and is a real number satisfying 0/100 ≤ y/x s 95/5; R¹ is represented by Formula (3): 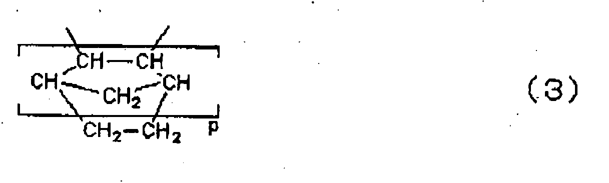
where, p is an integer of 0 to 2;
R² is a hydrogen atom or a monovalent group of at least one or more kind(s) selected from hydrocarbon groups having 1 to 10 carbon atoms(s);
R³ is at least one or more from Formula (4) to (6) 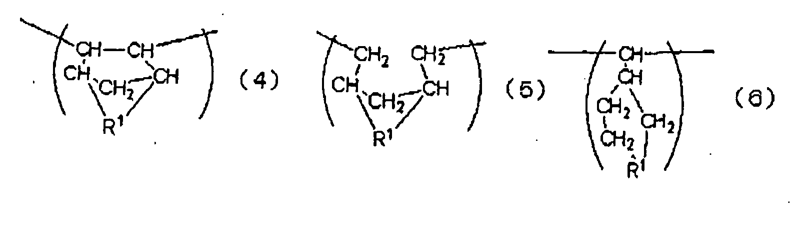
where, in Formula (4) to (6), R¹ indicates the same as in Formula (1),
wherein, Compound [B-1] is a hindered amine light stabilizer having the molecular weight of 400 or more to less than 1,000, and Compound [B-2] is a hindered amine light stabilizer having the molecular weight of 1,000 or more to 5,000 or less.

2. The thermoplastic resin composition as claimed in claim 1, wherein Compound [B-1] has a structure represented by Formula (2): 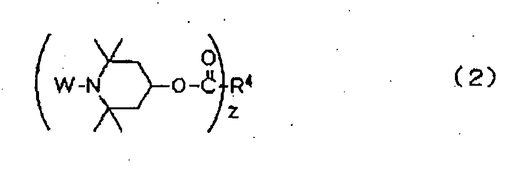 wherein, W represents a hydrogen atom or a methyl group, R⁴ represents a hydrocarbon group having 4 to 16 carbon atoms; and z is 1 or 2.

3. The thermoplastic resin composition as claimed in claim 1 or claim 2, further comprising 0.01 to 1 parts by mass of a phosphorus stabilizer, relative to 100 parts by mass of Polymer [A-1] or Polymer [A-2].

4. The thermoplastic resin composition as claimed in claims 1 to 3, further comprising 0.05 to 5 parts by mass of a hydrophilic stabilizer, relative to 100 parts by mass of Polymer [A-1] or Polymer [A-2].

5. A molded product which is obtainable by molding the thermoplastic resin composition of claims 1 to 4.

6. An optical element which is obtainable by molding the thermoplastic resin composition of claims 1 to 4.

7. An optical element which is obtainable by molding the thermoplastic resin composition of claims 1 to 4, wherein the optical element is used as an optical component useful for a laser optical system having the wavelength of 350 to 450 nm.

8. The optical element as claimed in claim 6 or 7, further comprising an optical path difference providing structure.

9. The optical element as claimed in claims 6 to 8, wherein the optical element is used for an optical pickup device.

10. The optical element as claimed in claim 9, wherein the optical element is used for an optical pickup device which employs a plurality of light sources of different wavelength and is capable of recording or playing back information on an optical information recording medium or various kinds having a different substrate thickness.

11. The optical element as claimed in claim 9 or 10, wherein the optical element is used for an optical pickup device having the light sources which at least one of the wavelength is from 390 nm to 420 nm.

12. The optical element as claimed in claims 6 to 11, wherein at least one part of the optical element is held by an actuator to be movable.

13. An optical pickup device employing the optical element of claims 9 to 12.

14. Use of a resin composition according to any one of claims 1 to 4 in an optical element.

15. Use according to claim 14 wherein the optical element is as defined in any one of claims 6 to 13.

## Patentansprüche

1. Thermoplastische Harzzusammensetzung, umfassend das durch die Formel (1) dargestellte Polymer [A-1], die Verbindung [B-1] und die Verbindung [B-2], wobei die Gesamtmenge an Verbindung [B-1] und Verbindung [B-2] zusammen 0,3 bis 5 Masseteile, bezogen auf 100 Masseteile von Polymer [A-1], beträgt und das Massenverhältnis [B-1]/[B-2] 1/10 bis 10/1 ist: 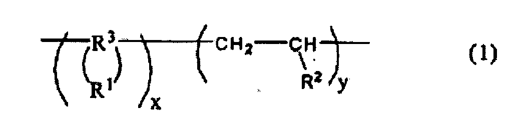 worin x und y jeweils ein Copolymerisationsverhältnis darstellen und eine reelle Zahl sind, die 0/100 ≤ y/x ≤ 95/5 erfüllt; R¹ durch die Formel (3) dargestellt ist: 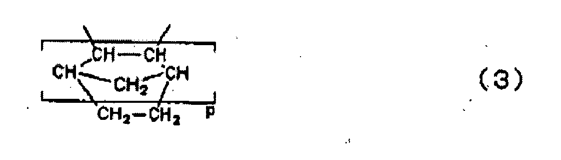
worin p eine ganze Zahl von 0 bis 2 ist;
R² ein Wasserstoffatom oder eine einwertige Gruppe aus mindestens einer oder mehreren Art(en) ist, die aus Kohlenwasserstoffgruppen mit 1 bis 10 Kohlenstoffatomen ausgewählt sind;
R³ mindestens eine oder mehrere der Formeln (4) bis (6) ist 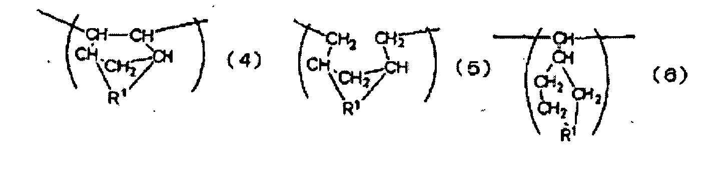
worin in den Formeln (4) bis (6) R¹ die gleiche Bedeutung wie in der Formel (1) hat, wobei die Verbindung [B-1] einen Lichtstabilisator aus gehindertem Amin [amine hindered light stabilizer] mit einem Molekulargewicht von 400 oder mehr bis weniger als 1.000 ist und die Verbindung [B-2] ein Lichtstabilisator aus gehindertem Amin mit einem Molekulargewicht von 1.000 oder mehr bis 5.000 oder weniger ist.

2. Thermoplastische Harzzusammensetzung nach Anspruch 1, wobei die Verbindung [B-1] einen durch die Formel (2) dargestellten Aufbau hat: 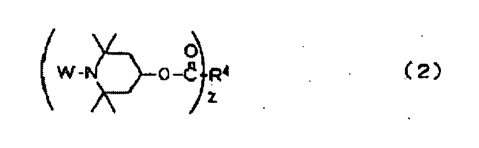 worin W ein Wasserstoffatom oder eine Methylgruppe ist; R⁴ eine Kohlenwasserstoffgruppe mit 4 bis 16 Kohlenstoffatomen darstellt; und z 1 oder 2 ist.

3. Thermoplastische Harzzusammensetzung nach Anspruch 1 oder Anspruch 2, weiter umfassend 0,01 bis 1 Masseteile eines Phosphorstabilisators, bezogen auf 100 Masseteile von Polymer [A-1].

4. Thermoplastische Harzzusammensetzung nach Anspruch 1 bis 3, weiter umfassend 0,05 bis 5 Masseteile eines hydrophilen Stabilisators, bezogen auf 100 Masseteile von Polymer [A-1].

5. Formprodukt, das durch Formen der thermoplastischen Harzzusammensetzung nach Anspruch 1 bis 4 erhältlich ist.

6. Optisches Element, das durch Formen der thermoplastischen Harzzusammensetzung nach Anspruch 1 bis 4 erhältlich ist.

7. Optisches Element, das durch Formen der thermoplastischen Harzzusammensetzung nach Ansrpuch 1 bis 4 erhältlich ist, wobei das optische Element als optische Komponente verwendet wird, die für ein laseroptisches System mit einer Wellenlänge von 350 bis 450 nm von Nutzen ist.

8. Optisches Element nach Anspruch 6 oder 7, weiter umfassend einen Aufbau, der einen Gangunterschied vorsieht.

9. Optisches Element nach Anspruch 6 bis 8, wobei das optische Element für eine optische Aufnahmevorrichtung verwendet wird.

10. Optisches Element nach Anspruch 9, wobei das optische Element für eine optische Aufnahmevorrichtung verwendet wird, die mehrere Lichtquellen mit unterschiedlicher Wellenlänge verwendet und in der Lage ist, Informationen auf einem optischen Informationsaufzeichnungsmedium von verschiedenen Arten mit unterschiedlicher Substratdicke aufzuzeichnen oder wiederzugeben.

11. Optisches Element nach Anspruch 9 oder 10, wobei das optische Element für eine optische Aufnahmeeinrichtung mit Lichtquellen verwendet wird, wovon mindestens eine eine Wellenlänge von 390 nm bis 420 nm hat.

12. Optisches Element nach Anspruch 6 bis 11, wobei mindestens ein Teil des optischen Elements von einem Betätiger beweglich gehalten wird.

13. Optische Aufnahmeeinrichtung, die das optische Element nach Anspruch 9 bis 12 verwendet.

14. Verwendung einer Harzzusammensetzung nach einem der Ansprüche 1 bis 4 in einem optischen Element.

15. Verwendung nach Anspruch 14, wobei das optische Element wie in einem der Ansprüche 6 bis 13 definiert ist.

## Revendications

1. Composition de résine thermoplastique, comprenant un polymère [A-1] représenté par la formule (1), un composé [B-1] et un composé [B-2], dans laquelle la quantité totale de ces composés [B-1] et [B-2] vaut de 0,3 à 5 parties en masse pour 100 parties en masse de polymère [A-1] et le rapport massique [B-1]/[B-2] vaut de 1/10 à 10/1 ; 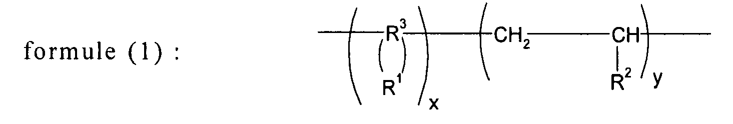 dans laquelle
- les indices x et y indiquent chacun un rapport de copolymérisation et sont des nombres réels satisfaisant les inégalités suivantes : 0/100 ≤ y/x ≤ 95/5 ;
- R¹ représente un groupe de formule (3) : 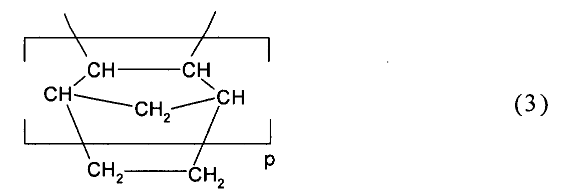 dans laquelle l'indice p est un nombre entier valant de 0 à 2 ;
- R² représente un atome d'hydrogène ou un groupe monovalent d'au moins un ou plusieurs type(s), choisi parmi les groupes hydrocarbyle comportant 1 à 10 atomes de carbone ;
- et R³ représente au moins l'un ou plusieurs des groupes de formules (4) à (6) : 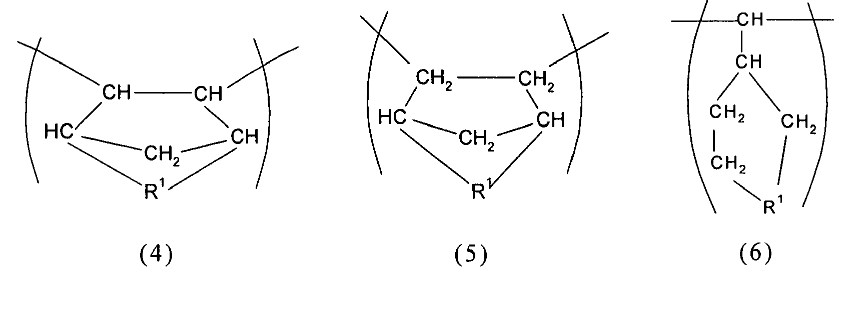 étant entendu que, dans ces formules (4) à (6), le symbole R¹ a la même signification que dans la formule (1) ;
et dans laquelle le composé [B-1] est un composé photostabilisant de type amine encombrée, dont la masse molaire vaut de 400 ou plus à moins de 1000, et le composé [B-2] est un composé photostabilisant de type amine encombrée, dont la masse molaire vaut de 1000 ou plus à 5000 ou moins.

2. Composition de résine thermoplastique, conforme à la revendication 1, dans laquelle le composé [B-1] présente une structure représentée par la formule (2) : 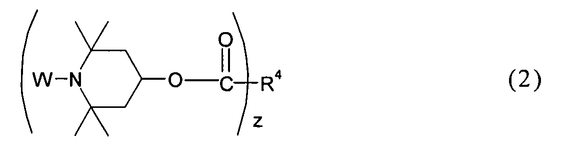 dans laquelle W représente un atome d'hydrogène ou un groupe méthyle, R⁴ représente un groupe hydrocarbyle comportant de 4 à 16 atomes de carbone, et l'indice z vaut 1 ou 2.

3. Composition de résine thermoplastique, conforme à la revendication 1 ou 2, qui comprend en outre un stabilisant phosphoré, en une proportion de 0,01 à 1 partie en masse pour 100 parties en masse de polymère [A-1].

4. Composition de résine thermoplastique, conforme à la revendication 1 ou 2, qui comprend en outre un stabilisant hydrophile, en une proportion de 0,05 à 5 parties en masse pour 100 parties en masse de polymère [A-1].

5. Produit moulé, qui peut être obtenu par moulage d'une composition de résine thermoplastique conforme à l'une des revendications 1 à 4.

6. Elément optique, qui peut être obtenu par moulage d'une composition de résine thermoplastique conforme à l'une des revendications 1 à 4.

7. Elément optique, qui peut être obtenu par moulage d'une composition de résine thermoplastique conforme à l'une des revendications 1 à 4, lequel élément optique est utilisé en tant que composant optique utile dans un système optique à laser dont la longueur d'onde vaut de 350 à 450 nm.

8. Elément optique conforme à la revendication 6 ou 7, qui comporte en outre une structure créant une différence de trajet optique.

9. Elément optique conforme à l'une des revendications 6 à 8, lequel élément optique est utilisé dans un dispositif de type tête optique.

10. Elément optique conforme à la revendication 9, lequel élément optique est utilisé dans un dispositif de type tête optique où sont employées plusieurs sources de lumière de différentes longueurs d'onde et qui est capable d'enregistrer des informations ou de reproduire des informations enregistrées sur des supports d'enregistrement optique d'informations de divers types comportant des substrats d'épaisseurs différentes.

11. Elément optique conforme à la revendication 9 ou 10, lequel élément optique est utilisé dans un dispositif de type tête optique où sont employées des sources de lumière dont au moins l'une fournit une lumière dont la longueur d'onde vaut de 390 à 420 nm.

12. Elément optique conforme à l'une des revendications 6 à 11, dont au moins une partie est tenue par un organe d'actionnement pour que l'on puisse le déplacer.

13. Dispositif de type tête optique dans lequel est employé un élément optique conforme à l'une des revendications 9 à 12.

14. Utilisation d'une composition de résine conforme à l'une des revendications 1 à 4 dans un élément optique.

15. Utilisation conforme à la revendication 14, l'élément optique étant conforme à l'une des revendications 6 à 12.
